# EUROPEAN PATENT APPLICATION

(11) **EP 4 683 421 A1**
(43) Date of publication of application: **21.01.2026**
(21) Application number: 24784111.7
(22) Date of filing: 26.03.2024
(51) Int. Cl.: H04W 72/542

(54) **COMMUNICATION METHOD AND COMMUNICATION APPARATUS**

(30) Priority: 06.04.2023 CN 202310404957
(71) Applicant: Huawei Technologies Co., Ltd., Shenzhen, Guangdong 518129 (CN)
(72) Inventor: LI, Junyao, Shenzhen, Guangdong 518129 (CN); YANG, Fan, Shenzhen, Guangdong 518129 (CN); ZHANG, Tianhong, Shenzhen, Guangdong 518129 (CN); HUANG, Haining, Shenzhen, Guangdong 518129 (CN)
(74) Representative: Epping - Hermann - Fischer
(86) International application number: PCT/CN2024/083840
(87) International publication number: WO 2024/208026

(57) **Abstract**

This application provides a communication method and a communication apparatus. The method includes: determining, at a first time, that listen before talk (listen before talk, LBT) on a first resource meets a consistent LBT failure; determining a first duration; and determining a first resource set from a resource selection window based on the first time and the first duration, where a resource in the first resource set is used for sidelink communication. Specifically, the first duration is set and the first resource set is selected from the resource selection window based on the first time, so that a resource that is in the first resource and that corresponds to the first duration is excluded from the resource selection window, and selection of an inappropriate communication resource is avoided. In addition, in the foregoing solution, a time range within which the first resource cannot be used is defined, so that a case in which the first resource for which the consistent LBT failure is triggered cannot continue to be used by a terminal device ever can be avoided.

## Description

This application claims priority to Chinese Patent Application No. 202310404957.1, filed with the China National Intellectual Property Administration on April 6, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Sidelink (sidelink, SL) communication supports direct transmission between terminal devices. Currently, the 3rd generation partnership project (3rd generation partnership project, 3GPP) is discussing extension of SL communication to an unlicensed spectrum with a larger bandwidth, that is, SL-unlicensed spectrum (SL-unlicensed, SL-U) communication, to support transmission of a service at a higher rate, for example, a virtual reality (virtual reality, VR) service.

For SL-U communication, a terminal device can autonomously select a transmission resource according to a specific rule. To avoid a conflict between transmission resources selected by a plurality of terminal devices, a resource exclusion mechanism is introduced in SL-U communication. Specifically, a terminal device senses sidelink control information (SL control information, SCI) of another terminal device in a sensing window (sensing window), excludes, from a resource selection window based on the SCI, a resource on which a reference signal received power (reference signal received power, RSRP) threshold is exceeded, to determine a candidate resource set, and reports the candidate resource set to a media access control (media access control, MAC) layer, and the MAC performs final selection.

Currently, after listen before talk (listen before talk, LBT) performed by the terminal device on a resource triggers a consistent LBT failure (consistent LBT failure), the resource cannot continue to be used by the terminal device in the resource selection window. Consequently, utilization of a resource used for SL transmission is low. Therefore, how to improve utilization of the resource used for SL transmission is an urgent technical problem to be resolved.

### SUMMARY

This application provides a communication method and a communication apparatus, to effectively improve utilization of a communication resource used for sidelink transmission.

It should be understood that, on an unlicensed spectrum, in addition to a communication apparatus/terminal that performs communication by using an SL-U technology, there is a communication apparatus/terminal that performs communication by using another technology, for example, a communication apparatus/terminal that performs communication by using a Wi-Fi technology. In this application, unless otherwise specified, a communication apparatus/terminal is a communication apparatus/terminal that performs communication by using the SL-U technology. According to a first aspect, a communication method is provided, including: determining, at a first time, that listen before talk LBT on a first resource meets a consistent LBT failure; determining a first duration; and determining a first resource set from a resource selection window based on the first time and the first duration, where a resource in the first resource set is used for sidelink communication.

Specifically, the first duration is set and the first resource set is selected from the resource selection window based on the first time, so that a resource that is in the first resource and that corresponds to the first duration is excluded from the resource selection window, and selection of an inappropriate communication resource is avoided.

Different from a conventional technology in which the first resource cannot be used by a terminal device if LBT on the first resource meets the consistent LBT failure, the first duration is set and the first resource set is determined from the resource selection window with reference to the first duration and the first time, which is equivalent to introducing a mechanism of restoring availability of the first resource, so that utilization of a communication resource used for sidelink transmission can be effectively improved. For example, when the terminal device determines the first resource set from the resource selection window, two factors, namely, the first time and the first duration, are considered in combination. In this way, a time range within which the first resource cannot be used is defined, so that a case in which the first resource cannot continue to be used by the terminal device ever can be avoided.

In a possible implementation, a slot in which resource selection is triggered and that corresponds to the resource selection window is in the first duration starting from the first time, and the first resource set does not include a resource that is in the resource selection window and that corresponds to the first resource; or the first resource set does not include a resource that is in the resource selection window, that corresponds to the first resource, and that is in the first duration starting from the first time.

In this way, during resource selection, the terminal device can exclude the resource corresponding to the first resource, to avoid selecting an inappropriate resource.

In a possible implementation, the method further includes: determining, based on at least one of the first duration and a first condition, to cancel the consistent LBT failure. The first condition includes: in the first duration starting from the first time, an accumulated quantity of times that a first channel busy ratio of the first resource is less than a first threshold is greater than a second threshold; and/or in the first duration starting from the first time, a second channel busy ratio of the first resource is less than a third threshold.

In this way, the first resource can continue to be selected and used by the terminal device after the consistent LBT failure is triggered, thereby improving utilization of a resource used for sidelink transmission.

In a possible implementation, the accumulated quantity of times that the first channel busy ratio of the first resource is less than the first threshold is greater than the second threshold, and the method further includes: measuring the first channel busy ratio of the first resource once every second duration in the first duration starting from the first time.

In a possible implementation, determining the first resource set from the resource selection window based on the first time and the first duration includes: determining a second resource set from the resource selection window, where the second resource set includes all candidate resources in the resource selection window; and determining the first resource set from the second resource set, where the first resource set does not include a second resource. The second resource includes either of the following: the resource that corresponds to the first resource and that is in the first duration starting from the first time; or the resource that is of the first resource and that is in the resource selection window, where the slot in which resource selection is triggered and that corresponds to the resource selection window is in the first duration starting from the first time. According to the foregoing technical solution, the terminal device may determine a resource set 1 from the resource selection window.

In a possible implementation, determining the first resource set from the resource selection window based on the first time and the first duration includes: determining a third resource set from the resource selection window, where the third resource set does not include a second resource; and determining the first resource set from the third resource set. The second resource includes either of the following: the resource that corresponds to the first resource and that is in the first duration starting from the first time; or the resource that is of the first resource and that is in the resource selection window, where the slot in which resource selection is triggered and that corresponds to the resource selection window is in the first duration starting from the first time.

According to the foregoing technical solution, the terminal device may determine a resource set 1 from the resource selection window.

In a possible implementation, determining the first resource set from the resource selection window based on the first time and the first duration includes: determining a fourth resource set from the resource selection window, where the fourth resource set includes all candidate resources in the resource selection window; and determining the first resource set from the fourth resource set, where the first resource set does not include a fourth resource, and the fourth resource is a resource that is in a third resource and that does not meet a channel occupancy time sharing condition. The third resource includes either of the following: the resource that corresponds to the first resource and that is in the first duration starting from the first time; or the resource that is of the first resource and that is in the resource selection window, where the slot in which resource selection is triggered and that corresponds to the resource selection window is in the first duration starting from the first time.

According to the foregoing technical solution, the terminal device may determine a resource set 1 from the resource selection window.

In a possible implementation, determining the first resource set from the resource selection window based on the first time and the first duration includes: determining a fifth resource set from the resource selection window, where the fifth resource set does not include a sixth resource, and the sixth resource is a resource that is in a fifth resource and that does not meet a channel occupancy time sharing condition; and determining the first resource set from the fifth resource set. The fifth resource includes either of the following: the resource that corresponds to the first resource and that is in the first duration starting from the first time; or the resource that is of the first resource and that is in the resource selection window, where the slot in which resource selection is triggered and that corresponds to the resource selection window is in the first duration starting from the first time.

According to the foregoing technical solution, the terminal device may determine a resource set 1 from the resource selection window.

In a possible implementation, a length or an end position of the first duration is determined based on at least one of a preconfiguration and indication information.

In a possible implementation, the method further includes: reporting, to a network device, at least one of an identifier of the first resource and an identifier of a resource pool corresponding to the first resource.

In this way, the network device can avoid scheduling the first resource during scheduling.

In a possible implementation, the method further includes: sending sidelink information to a second terminal device by using the first resource set.

According to a second aspect, a communication method is provided. The method includes: receiving sidelink information sent from a first terminal device.

According to a third aspect, a communication method is provided. The method includes: sending first indication information to a network device, where the first indication information indicates that it is determined, at a first time, that LBT on a first resource meets a consistent LBT failure; receiving second indication information from the network device, where the second indication information indicates a second resource; and sending sidelink information on the second resource. According to the foregoing technical solution, in this application, a signaling exchange and scheduling constraint between a terminal device and the network device is defined, to ensure that the network device preferentially allocates a more idle resource to the terminal device, avoid an LBT failure of the terminal device caused by selection of a resource in a consistent LBT failure state, and avoid a long delay and high signaling overheads caused by frequent NACK feedback of the terminal device to the network device and rescheduling of the network device.

In a possible implementation, the second indication information is received from the network device, and the method includes: receiving the second indication information from the network device before the consistent LBT failure on the first resource is canceled. Alternatively, the second resource is before the consistent LBT failure on the first resource is canceled. The second resource is different from the first resource.

In a possible implementation, the method further includes: sending second indication information to the network device based on at least one of the first time, a first duration, and a first condition, where the second indication information indicates to cancel the consistent LBT failure on the first resource. The first condition includes: in the first duration starting from the first time, an accumulated quantity of times that a first channel busy ratio of the first resource is less than a first threshold is greater than a second threshold; and/or in the first duration, a second channel busy ratio of the first resource is less than a third threshold.

In a possible implementation, the accumulated quantity of times that the first channel busy ratio of the first resource is less than the first threshold is greater than the second threshold, and the method further includes: measuring the first channel busy ratio of the first resource once every second duration in the first duration.

In a possible implementation, a length or an end position of the first duration is determined based on at least one of a preconfiguration and indication information.

In a possible implementation, the method further includes: reporting, to the network device, an identifier of the first resource and/or an identifier of a resource pool corresponding to the first resource.

According to a fourth aspect, a communication method is provided. The method includes: receiving first indication information from a terminal device, where the first indication information indicates that it is determined, at a first time, that LBT on a first resource meets a consistent LBT failure; and sending second indication information to the terminal device based on the first indication information, where the second indication information indicates a second resource, and the second resource is used by the terminal device to send sidelink information.

In a possible implementation, the method includes: sending the second indication information to the terminal device before the consistent LBT failure on the first resource is canceled. Alternatively, the second resource is before the consistent LBT failure on the first resource is canceled. The second resource is different from the first resource.

In a possible implementation, the method further includes: receiving, from the terminal device, an identifier of the first resource and/or an identifier of a resource pool corresponding to the first resource.

According to a fifth aspect, a communication method is provided. The method includes: A first terminal device determines a first time-frequency resource, where the first time-frequency resource is used to transmit first sidelink information. The first terminal device determines a length or a start position of a first cyclic prefix extension CPE. The first terminal device sends the first CPE before the first time-frequency resource, and sends the first sidelink information on the first time-frequency resource.

According to the foregoing technical solution, in this application, determining of different scenarios to which different maximum CPE lengths/earliest CPE start positions are applicable is supported, and a method for determining CPEs in different scenarios is designed, to ensure that FDM and high-priority transmission can be performed smoothly, and ensure communication performance.

In a possible implementation, that the first terminal device determines the length or the start position of the first CPE includes: determining the length or the start position of the first CPE based on a first parameter in a first manner. The first parameter includes at least one of the following: a position of the first time-frequency resource in a channel occupancy time COT, a type of a frequency domain resource of the first time-frequency resource, whether a second time-frequency resource reserved by a second terminal device and the first time-frequency resource meet frequency division multiplexing, where the second time-frequency resource is used by the second terminal device to transmit second sidelink information, whether the second time-frequency resource and the first time-frequency resource overlap in frequency domain, a priority of the first sidelink information, a transmission type of the first sidelink information, a length range of the first CPE, a priority of the second sidelink information, a length range of a second CPE, an identifier of the second CPE, and a length or a start position of the second CPE. The first manner includes at least one of the following: determining based on a preconfiguration, determining based on the priority of the first sidelink information, determining based on the length or the start position of the second CPE, determining based on indication information of a terminal device that initiates the COT, and randomly determining from one or more candidate values.

In a possible implementation, there is a correspondence between the priority of the first sidelink information and the length or the start position of the first CPE, and the correspondence is determined based on a preconfiguration or a predefinition; and/or the correspondence between the priority of the first sidelink information and the length or the start position of the first CPE is determined based on a subcarrier spacing; and/or the correspondence between the priority of the first sidelink information and the length or the start position of the first CPE is determined based on a length range type of the first CPE.

In a possible implementation, the method further includes: determining the length range of the first CPE based on a second parameter. The second parameter includes at least one of the following: the position of the first time-frequency resource in the COT, whether the second sidelink information is transmitted in a slot previous to a first slot in which the first time-frequency resource is located, an interval between an end symbol of a resource used for sidelink transmission in the previous slot and a start symbol of a resource used for transmission of the first sidelink information in the slot in which the first time-frequency resource is located, and the length range of the second CPE.

According to a sixth aspect, a communication method is provided. The method includes: receiving first sidelink information that is sent by a first terminal device on a first time-frequency resource. According to a seventh aspect, a communication method is provided. The method includes: determining a first time-frequency resource and a second time-frequency resource from a resource pool, where the first time-frequency resource is used for sidelink data transmission, and the second time-frequency resource is used for sidelink synchronization signal and physical broadcast signal block S-SSB transmission; and performing the sidelink data transmission on the first time-frequency resource, and/or performing the S-SSB transmission on the second time-frequency resource.

According to the foregoing technical solution, in this application, a resource selection/exclusion method is designed for an S-SSB transmission occasion in a resource pool, to avoid a problem of concurrency and half-duplex of a same terminal device between an S-SSB and sidelink data, thereby ensuring communication performance.

In a possible implementation, determining the first time-frequency resource and the second time-frequency resource from the resource pool includes: the first time-frequency resource is different from the second time-frequency resource, and the second time-frequency resource is used to transmit the S-SSB; and/or all frequency domain resources in a resource block set on time domain resources on which the first time-frequency resource and the second time-frequency resource are located are different, and the second time-frequency resource is used to transmit the S-SSB; and/or all frequency domain resources in a resource pool or a bandwidth part BWP on the time domain resources on which the first time-frequency resource and the second time-frequency resource are located are different, and the second time-frequency resource is used to transmit the S-SSB.

In a possible implementation, the method further includes: determining, based on a priority of the sidelink data transmission and a priority of the S-SSB or according to a predefined rule, to perform the sidelink data transmission on the first time-frequency resource or perform the S-SSB transmission on the second time-frequency resource, where the time domain resource on which the first time-frequency resource is located overlaps the time domain resource on which the second time-frequency resource is located, and the predefined rule is preferentially transmitting the S-SSB on the second time-frequency resource.

According to an eighth aspect, a communication method is provided. The method includes: receiving sidelink data that is sent by a first terminal device on a first time-frequency resource, and/or receiving an S-SSB that is sent by the first terminal device on a second time-frequency resource.

According to a ninth aspect, a communication apparatus is provided, including: a processing unit, configured to determine, at a first time, that listen before talk LBT on a first resource meets a consistent LBT failure. The processing unit is further configured to determine a first duration. The processing unit is further configured to determine a first resource set from a resource selection window based on the first time and the first duration, where a resource in the first resource set is used for sidelink communication.

In a possible implementation, a slot in which resource selection is triggered and that corresponds to the resource selection window is in the first duration starting from the first time, and the first resource set does not include a resource that is in the resource selection window and that corresponds to the first resource; or the first resource set does not include a resource that is in the resource selection window, that corresponds to the first resource, and that is in the first duration starting from the first time.

In a possible implementation, the processing unit is further configured to determine, based on at least one of the first duration and a first condition, to cancel the consistent LBT failure. The first condition includes: in the first duration starting from the first time, an accumulated quantity of times that a first channel busy ratio of the first resource is less than a first threshold is greater than a second threshold; and/or in the first duration starting from the first time, a second channel busy ratio of the first resource is less than a third threshold.

In a possible implementation, the accumulated quantity of times that the first channel busy ratio of the first resource is less than the first threshold is greater than the second threshold. The processing unit is further configured to measure, by the terminal device, the first channel busy ratio of the first resource once every second duration in the first duration starting from the first time.

In a possible implementation, the processing unit is further configured to determine a second resource set from the resource selection window, where the second resource set includes all candidate resources in the resource selection window; and determine the first resource set from the second resource set, where the first resource set does not include a second resource. The second resource includes either of the following: the resource that corresponds to the first resource and that is in the first duration starting from the first time; or the resource that is of the first resource and that is in the resource selection window, where the slot in which resource selection is triggered and that corresponds to the resource selection window is in the first duration starting from the first time.

In a possible implementation, the processing unit is further configured to determine a third resource set from the resource selection window, where the third resource set does not include a second resource; and determine the first resource set from the third resource set. The second resource includes either of the following: the resource that corresponds to the first resource and that is in the first duration starting from the first time; or the resource that is of the first resource and that is in the resource selection window, where the slot in which resource selection is triggered and that corresponds to the resource selection window is in the first duration starting from the first time.

In a possible implementation, the processing unit is further configured to: determine a fourth resource set from the resource selection window, where the fourth resource set includes all candidate resources in the resource selection window; and determine the first resource set from the fourth resource set, where the first resource set does not include a fourth resource, and the fourth resource is a resource that is in a third resource and that does not meet a channel occupancy time sharing condition. The third resource includes either of the following: the resource that corresponds to the first resource and that is in the first duration starting from the first time; or the resource that is of the first resource and that is in the resource selection window, where the slot in which resource selection is triggered and that corresponds to the resource selection window is in the first duration starting from the first time.

In a possible implementation, the processing unit is further configured to: determine a fifth resource set from the resource selection window, where the fifth resource set does not include a sixth resource, and the sixth resource is a resource that is in a fifth resource and that does not meet a channel occupancy time sharing condition; and determine the first resource set from the fifth resource set. The fifth resource includes either of the following: the resource that corresponds to the first resource and that is in the first duration starting from the first time; or the resource that is of the first resource and that is in the resource selection window, where the slot in which resource selection is triggered and that corresponds to the resource selection window is in the first duration starting from the first time.

In a possible implementation, a length or an end position of the first duration is determined based on at least one of a preconfiguration and indication information.

In a possible implementation, the apparatus further includes: a transceiver unit, configured to report, to a network device, at least one of an identifier of the first resource and an identifier of a resource pool corresponding to the first resource.

According to a tenth aspect, a communication apparatus is provided, including a transceiver unit, configured to receive sidelink information sent by a first terminal device.

According to an eleventh aspect, a communication apparatus is provided, including: a transceiver unit, configured to send first indication information to a network device, where the first indication information indicates that it is determined, at a first time, that LBT on a first resource meets a consistent LBT failure. The transceiver unit is further configured to receive second indication information from the network device, where the second indication information indicates a second resource. The transceiver unit is further configured to send sidelink information on the second resource.

In a possible implementation, the transceiver unit is further configured to receive the second indication information from the network device before the consistent LBT failure on the first resource is canceled. Alternatively, the second resource is before the consistent LBT failure on the first resource is canceled. The second resource is different from the first resource.

In a possible implementation, the transceiver unit is further configured to send second indication information to the network device based on at least one of the first time, a first duration, and a first condition, where the second indication information indicates to cancel the consistent LBT failure on the first resource. The first condition includes: in the first duration starting from the first time, an accumulated quantity of times that a first channel busy ratio of the first resource is less than a first threshold is greater than a second threshold; and/or in the first duration, a second channel busy ratio of the first resource is less than a third threshold.

In a possible implementation, the apparatus further includes a processing unit, configured to measure the first channel busy ratio of the first resource once every second duration in the first duration.

In a possible implementation, a length or an end position of the first duration is determined based on at least one of a preconfiguration and indication information.

In a possible implementation, the transceiver unit is further configured to report, to the network device, an identifier of the first resource and/or an identifier of a resource pool corresponding to the first resource.

According to a twelfth aspect, a communication apparatus is provided. The method includes: a transceiver unit, configured to receive first indication information from a terminal device, where the first indication information indicates that it is determined, at a first time, that LBT on a first resource meets a consistent LBT failure. The transceiver unit is further configured to send second indication information to the terminal device based on the first indication information, where the second indication information indicates a second resource, and the second resource is used by the terminal device to send sidelink information.

In a possible implementation, the transceiver unit is further configured to send the second indication information to the terminal device before the consistent LBT failure on the first resource is canceled. Alternatively, the second resource is before the consistent LBT failure on the first resource is canceled. The second resource is different from the first resource.

In a possible implementation, the transceiver unit is further configured to receive, from the terminal device, an identifier of the first resource and/or an identifier of a resource pool corresponding to the first resource.

According to a thirteenth aspect, a communication apparatus is provided. The method includes: a processing unit, configured to determine a first time-frequency resource, where the first time-frequency resource is used to transmit first sidelink information, and the processing unit is further configured to determine a length or a start position of a first cyclic prefix extension CPE; and a transceiver unit, configured to send the first CPE before the first time-frequency resource, and send the first sidelink information on the first time-frequency resource.

In a possible implementation, the processing unit is configured to determine the length or the start position of the first CPE based on a first parameter in a first manner. The first parameter includes at least one of the following: a position of the first time-frequency resource in a channel occupancy time COT, a type of a frequency domain resource of the first time-frequency resource, whether a second time-frequency resource reserved by a second terminal device and the first time-frequency resource meet frequency division multiplexing, where the second time-frequency resource is used by the second terminal device to transmit second sidelink information, whether the second time-frequency resource and the first time-frequency resource overlap in frequency domain, a priority of the first sidelink information, a transmission type of the first sidelink information, a length range of the first CPE, a priority of the second sidelink information, a length range of a second CPE, an identifier of the second CPE, and a length or a start position of the second CPE. The first manner includes at least one of the following: determining based on a preconfiguration, determining based on the priority of the first sidelink information, determining based on the length or the start position of the second CPE, determining based on indication information of a terminal device that initiates the COT, and randomly determining from one or more candidate values.

In a possible implementation, there is a correspondence between the priority of the first sidelink information and the length or the start position of the first CPE, and the correspondence is determined based on a preconfiguration or a predefinition; and/or the correspondence between the priority of the first sidelink information and the length or the start position of the first CPE is determined based on a subcarrier spacing; and/or the correspondence between the priority of the first sidelink information and the length or the start position of the first CPE is determined based on a length range type of the first CPE.

In a possible implementation, the processing unit is further configured to determine the length range of the first CPE based on a second parameter. The second parameter includes at least one of the following: the position of the first time-frequency resource in the COT, whether the second sidelink information is transmitted in a slot previous to a first slot in which the first time-frequency resource is located, an interval between an end symbol of a resource used for sidelink transmission in the previous slot and a start symbol of a resource used for transmission of the first sidelink information in the slot in which the first time-frequency resource is located, and the length range of the second CPE.

According to a fourteenth aspect, a communication apparatus is provided, including a transceiver unit, configured to receive sidelink information that is sent by a first terminal device on a first time-frequency resource.

According to a fifteenth aspect, a communication apparatus is provided. The method includes: a processing unit, configured to determine a first time-frequency resource and a second time-frequency resource from a resource pool, where the first time-frequency resource is used for sidelink data transmission, and the second time-frequency resource is used for sidelink synchronization signal and physical broadcast signal block S-SSB transmission; and a transceiver unit, configured to perform the sidelink data transmission on the first time-frequency resource, and/or perform the S-SSB transmission on the second time-frequency resource.

In a possible implementation, the first time-frequency resource is different from the second time-frequency resource, and the second time-frequency resource is used to transmit the S-SSB; and/or all frequency domain resources in a resource block set on time domain resources on which the first time-frequency resource and the second time-frequency resource are located are different, and the second time-frequency resource is used to transmit the S-SSB; and/or all frequency domain resources in a resource pool or a bandwidth part on the time domain resources on which the first time-frequency resource and the second time-frequency resource are located are different, and the second time-frequency resource is used to transmit the S-SSB.

In a possible implementation, the processing unit is further configured to determine, based on a priority of the sidelink data transmission and a priority of the S-SSB or according to a predefined rule, to perform the sidelink data transmission on the first time-frequency resource or perform the S-SSB transmission on the second time-frequency resource, where the time domain resource on which the first time-frequency resource is located overlaps the time domain resource on which the second time-frequency resource is located, and the predefined rule is preferentially transmitting the S-SSB on the second time-frequency resource.

According to a sixteenth aspect, a communication apparatus is provided, including a transceiver unit, configured to: receive sidelink data that is sent by a first terminal device on a first time-frequency resource, and/or receive an S-SSB that is sent by the first terminal device on a second time-frequency resource.

According to a seventeenth aspect, a communication apparatus is provided, including a processor.

The processor is configured to enable, by executing a computer program or instructions or by using a logic circuit, the communication apparatus to perform the method according to any one of the first aspect and the possible implementations of the first aspect, the method according to any one of the second aspect and the possible implementations of the second aspect, the method according to any one of the third aspect and the possible implementations of the third aspect, the method according to any one of the fourth aspect and the possible implementations of the fourth aspect, the method according to any one of the fifth aspect and the possible implementations of the fifth aspect, the method according to any one of the sixth aspect and the possible implementations of the sixth aspect, the method according to any one of the seventh aspect and the possible implementations of the seventh aspect, or the method according to any one of the eighth aspect and the possible implementations of the eighth aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to an eighteenth aspect, a communication apparatus is provided, including a logic circuit and an input/output interface. The input/output interface is configured to input and/or output a signal, and the logic circuit is configured to perform the method according to any one of the first aspect and the possible implementations of the first aspect, the method according to any one of the second aspect and the possible implementations of the second aspect, the method according to any one of the third aspect and the possible implementations of the third aspect, the method according to any one of the fourth aspect and the possible implementations of the fourth aspect, the method according to any one of the fifth aspect and the possible implementations of the fifth aspect, the method according to any one of the sixth aspect and the possible implementations of the sixth aspect, the method according to any one of the seventh aspect and the possible implementations of the seventh aspect, or the method according to any one of the eighth aspect and the possible implementations of the eighth aspect.

According to a nineteenth aspect, a computer-readable storage medium is provided, including a computer program or instructions. When the computer program or the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed, or the method according to any one of the sixth aspect and the possible implementations of the sixth aspect is performed, or the method according to any one of the seventh aspect and the possible implementations of the seventh aspect is performed, or the method according to any one of the eighth aspect and the possible implementations of the eighth aspect is performed.

According to a twentieth aspect, a computer program product is provided, including instructions. When the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed, or the method according to any one of the sixth aspect and the possible implementations of the sixth aspect is performed, or the method according to any one of the seventh aspect and the possible implementations of the seventh aspect is performed, or the method according to any one of the eighth aspect and the possible implementations of the eighth aspect is performed.

According to a twenty-first aspect, a computer program is provided. When the computer program is run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed, or the method according to any one of the sixth aspect and the possible implementations of the sixth aspect is performed, or the method according to any one of the seventh aspect and the possible implementations of the seventh aspect is performed, or the method according to any one of the eighth aspect and the possible implementations of the eighth aspect is performed.

### BRIEF DESCRIPTION OF DRAWINGS

FIG. 1 is a diagram of a communication system 100 to which an embodiment of this application is applicable;
FIG. 2 is a diagram of a resource exclusion mechanism;
FIG. 3 is a diagram of a consistent LBT failure mechanism in continuous NR-U;
FIG. 4 is a diagram of a communication method 400 according to an embodiment of this application;
FIG. 5 is a diagram of resource selection according to an embodiment of this application;
FIG. 6 is another diagram of resource selection according to an embodiment of this application;
FIG. 7 is a diagram of a relationship between an RB set and an RP according to an embodiment of this application;
FIG. 8 is a diagram of a communication method 800 according to an embodiment of this application;
FIG. 9 is a diagram of a communication method 900 according to an embodiment of this application;
FIG. 10 is a diagram of a communication method 1000 according to an embodiment of this application;
FIG. 11 is a block diagram of a communication apparatus 1100 according to an embodiment of this application;
FIG. 12 is a block diagram of a communication apparatus 1200 according to an embodiment of this application;
FIG. 13 is a block diagram of a communication apparatus 1300 according to an embodiment of this application;
FIG. 14 is a block diagram of a communication apparatus 1400 according to an embodiment of this application; and
FIG. 15 is a block diagram of a communication apparatus 1500 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or new radio (new radio, NR), a system evolved after 5G, such as a 6th generation (6th generation, 6G) system, and non-terrestrial communication network (non-terrestrial network, NTN) systems such as an inter-satellite communication system and a satellite communication system. The satellite communication system includes a satellite base station and a terminal device. The satellite base station provides a communication service for the terminal device. The satellite base station may also communicate with a terrestrial base station. A satellite may be used as a base station, and may also be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, the technical solutions have no limitation on transmission reception points, may be used for coordinated multi-point transmission between macro base stations, between micro base stations, and between a macro base station and a micro base station, and are applicable to both an FDD system and a TDD system. The technical solutions in embodiments of this application are not only applicable to a low-frequency scenario (sub 6G), but also applicable to a high-frequency scenario (above 6 GHz), terahertz, optical communication, and the like. The technical solutions in embodiments of this application are not only applicable to communication between a network device and a terminal, but also applicable to communication between network devices, communication between terminals, communication in an internet of vehicles, communication in an internet of things, communication in an industrial internet, and the like.

The technical solutions in embodiments of this application may also be applied to a scenario in which a terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, the CN is a 6G core, the base station is a 6G base station, and the 6G base station is directly connected to the 6G core. The technical solutions in embodiments of this application are also applicable to a dual connectivity (dual connectivity, DC) scenario in which a terminal is connected to at least two base stations.

The technical solutions in embodiments of this application are also applicable to a macro-micro scenario including different forms of base stations in a communication network. For example, the base station may be a satellite, an air balloon station, an uncrewed aerial vehicle station, or the like. The technical solutions in embodiments of this application are also applicable to a scenario including both a wide-coverage base station and a small-coverage base station.

The technical solutions in embodiments of this application may be further applied to 5.5G, 6G, and later wireless communication systems. Application scenarios include but are not limited to scenarios such as terrestrial cellular communication, NTN, satellite communication, high-altitude platform station (high-altitude platform station, HAPS) communication, vehicle-to-everything (vehicle-to-everything, V2X), integrated access and backhaul (integrated access and backhaul, IAB), reconfigurable intelligent surface (reconfigurable intelligent surface, RIS) communication, and indoor commercial use.

The technical solutions in embodiments of this application may be further applied to SL communication between terminal devices that directly communicate with each other, that is, both a shared channel and a feedback channel are transmitted and received between the terminal devices. It should be understood that the technical solutions in embodiments of this application may be further applied to a scenario such as indoor commercial use, for example, a mobile phone performs high-definition projection to a large screen, or a mobile phone transmits a VR video to VR glasses. The terminal device in embodiments of this application may be a device with a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device with a wireless communication function, a computing device or another processing device connected to a wireless modem, an in-vehicle device, a communication device carried on a high-altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in embodiments of this application.

Alternatively, the terminal device in embodiments of this application may be an in-vehicle module such as a roadside unit (roadside unit, RSU), a remote communication module (telematics box, T-Box), or an on-board unit (on-board unit, OBU).

In embodiments of this application, an apparatus configured to implement a function of the terminal device may be the terminal device, or may be an apparatus that can support the terminal device in implementing the function, for example, a chip system. The apparatus may be installed in the terminal device or used in combination with the terminal device. In embodiments of this application, the chip system may include a chip, or may include a chip and another discrete component.

The network device in embodiments of this application is a device with a wireless transceiver function, and is configured to communicate with the terminal device. The access network device may be a node in a radio access network (radio access network, RAN), and may alternatively be referred to as a base station or a RAN node. The network device may be an evolved NodeB (evolved NodeB, eNB, or eNodeB) in LTE, a base station in a 5G network, such as a gNodeB (gNB), a base station in a public land mobile network (public land mobile network, PLMN) evolved after 5G, a broadband network gateway (broadband network gateway, BNG), an aggregation switch, a 3GPP access device, or the like.

The network device in embodiments of this application may further include base stations in various forms, for example, a macro base station, a micro base station (also referred to as a small cell), a relay station, a transmission reception point (transmission reception point, TRP), a transmission point (transmission point, TP), a mobile switching center, and a device that undertakes a base station function in device-to-device (device-to-device, D2D), vehicle-to-everything (vehicle-to-everything, V2X), or machine-to-machine (machine-to-machine, M2M) communication. The network device may further include a central unit (central unit, CU) and a distributed unit (distributed unit, DU) in a cloud radio access network (cloud radio access network, C-RAN) system, and a network device in an NTN communication system. This is not specifically limited in embodiments of this application.

In embodiments of this application, an apparatus configured to implement a function of the network device may be the network device, or may be an apparatus that can support the network device in implementing the function, for example, a chip system. The apparatus may be installed in the network device or used in combination with the network device. In embodiments of this application, the chip system may include a chip, or may include a chip and another discrete component.

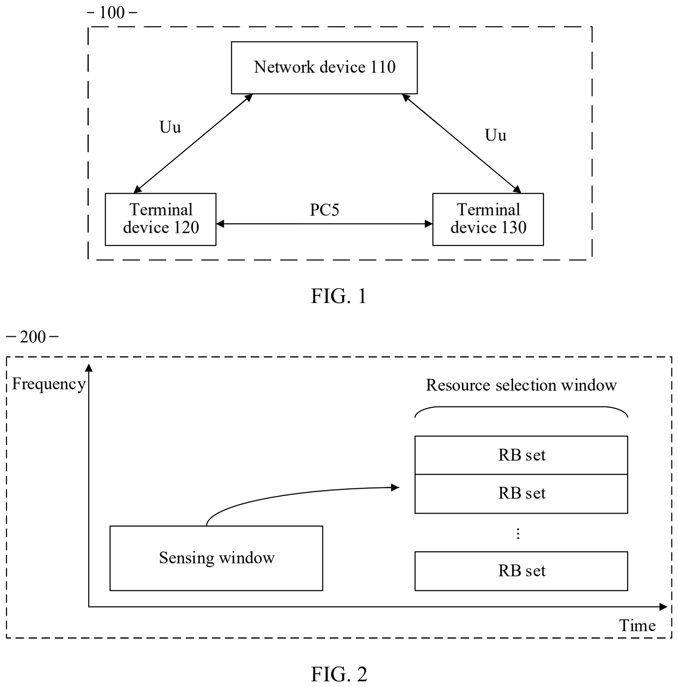

FIG. 1 is a diagram of a communication system 100 to which an embodiment of this application is applicable. As shown in FIG. 1, the communication system 100 includes a network device 110, a terminal device 120, and a terminal device 130. Quantities of terminal devices and network devices included in the communication system 100 are not limited in this embodiment of this application. It may be understood that FIG. 1 is merely an example for understanding, and shall not limit the protection scope claimed in this application.

In the communication system 100, the terminal device 120 and the terminal device 130 may be any terminal device listed above, and the network device 110 may be any network device listed above. This is not limited.

In the communication system 100, the terminal device 120 and the terminal device 130 may communicate with each other through a PC5 interface, that is, SL communication is performed between the terminal device 120 and the terminal device 130. The terminal device 120 or the terminal device 130 may communicate with the network device 110 through an air interface (Uu). The following briefly describes some terms related to technical solutions disclosed in this application.

First: Resource exclusion mechanism.

For SL-U communication, a terminal device can autonomously select a transmission resource according to a specific rule. During transmission resource selection of the terminal device, to avoid a conflict between transmission resources selected by a plurality of terminal devices, the resource exclusion mechanism is introduced in SL-U communication. For details, refer to FIG. 2.

FIG. 2 is a diagram of the resource exclusion mechanism. As shown in FIG. 2, the resource exclusion mechanism includes a sensing window and a resource selection window. A frequency domain resource in the resource selection window includes a plurality of resource block (resource block, RB) sets. A physical layer (physical layer, PHY) of the terminal device determines the resource selection window, and a time-frequency resource in the resource selection window is shared by a plurality of terminal devices. The PHY layer first excludes, from the resource selection window, a frequency domain resource corresponding to a slot that is not sensed, to determine an initial candidate resource set. The PHY layer excludes, from the resource selection window based on SCI that is sent by another terminal device and that is sensed in the sensing window and a reference signal received power (reference signal received power, RSRP) threshold configured by a higher layer, a time-frequency resource with RSRP greater than the RSRP threshold in time-frequency resources reserved or used by the another terminal device, to determine a candidate resource set. Further, the PHY layer reports the candidate resource set to a MAC layer of the terminal device, and the MAC layer finally selects a communication resource used for sidelink transmission of the terminal device.

Second: Consistent LBT failure (consistent LBT failure) mechanism.

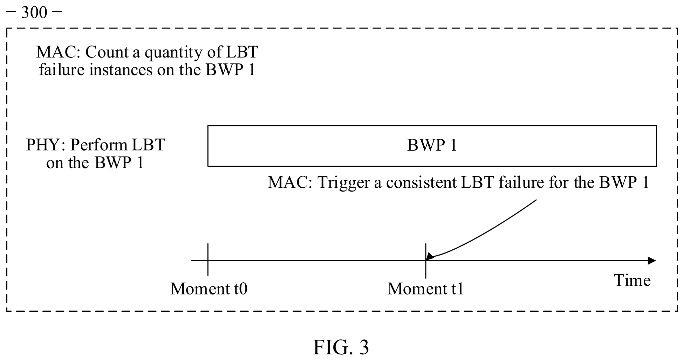

For SL-U communication, after a quantity of LBT failures on a frequency domain resource at the PHY layer reaches a threshold, the MAC layer determines that LBT on the frequency domain resource meets (or triggers) a consistent LBT failure. Consequently, the terminal device cannot continue to use the frequency domain resource. For descriptions of the consistent LBT failure mechanism, refer to FIG. 3.

Optionally, the frequency domain resource is an RB set (set), a resource pool (resource pool, RP), or a bandwidth part (bandwidth part, BWP). Optionally, the LBT failure on the frequency domain resource is an LBT failure on any frequency domain resource in the frequency domain resource. For example, when the resource is an RP, when LBT on an RB set in the RP fails, it is considered that LBT on the RP fails.

FIG. 3 is a diagram of the consistent LBT failure mechanism in continuous NR-U. As shown in FIG. 3, the PHY layer performs LBT on a BWP 1 or a resource in the BWP 1. Each time the PHY layer experiences one LBT failure on the BWP 1 or the resource in the BWP 1, the PHY layer reports one instance (instance) to the MAC layer. When the MAC layer receives the instance reported by the PHY layer, the MAC layer starts or restarts a timer (timer), and sets a counter (counter) to 0. Before the timer expires, the counter maintained by the MAC layer is increased by one each time the MAC layer receives one LBT failure instance on the BWP 1 or the resource in the BWP 1. When the counter maintained by the MAC layer reaches a threshold, the MAC layer triggers a consistent LBT failure on the BWP 1. If the timer expires, the counter is reset to 0.

Optionally, a moment or a slot in which the MAC layer starts or restarts the timer is t0. Optionally, a moment or a slot in which the MAC layer determines that LBT on the BWP 1 meets the consistent LBT failure is t1, or a moment or a slot in which the MAC layer triggers the consistent LBT failure on the BWP 1 is t1. For ease of description, only the moment t0 and the moment t1 are used as an example for description in FIG. 3, but this is not a final limitation.

Similarly, for SL-U, the consistent LBT failure mechanism may be as follows: The PHY layer performs LBT on an RB set 1 or a resource in the RB set 1. Each time the PHY layer experiences one LBT failure on the RB set 1 or the resource in the RB set 1, the PHY layer reports one instance to the MAC layer. When the MAC layer receives the instance reported by the PHY layer, the MAC starts or restarts a timer, and sets a counter to 0. Before the timer expires, the counter maintained by the MAC layer is increased by one each time the MAC receives one LBT failure instance on the RB set 1 or the resource in the RB set 1. When the counter maintained by the MAC layer reaches a threshold, the MAC layer triggers a consistent LBT failure on the RB set 1. If the timer expires, the counter is reset to 0.

Optionally, a moment or a slot in which the MAC layer starts or restarts the timer is t0. Optionally, a moment or a slot in which the MAC layer determines that LBT on the RB set 1 meets the consistent LBT failure is t1, or a moment or a slot in which the MAC layer triggers the consistent LBT failure on the RB set 1 is t1.

Optionally, the RB set 1 may be replaced with an RP 1 or the BWP 1.

In a conventional technology, when the terminal device triggers a consistent LBT failure on an RB set or an RP, the RB set or the RP cannot continue to be used by the terminal device. However, because channel busyness changes with time, the foregoing stipulation causes a waste of a communication resource, and consequently, utilization of a communication resource used for sidelink transmission is low. In addition, when communication resources that can be used by the terminal device are limited, the foregoing manner further reduces the communication resources that can be used by the terminal device, and consequently, the terminal device may fail to perform sidelink transmission.

In view of the foregoing technical problem, this application provides a communication method and a communication apparatus, to effectively improve utilization of a communication resource used for sidelink transmission.

It should be noted once for all that, for a consistent LBT failure or for an LBT failure on an RB set, release, cancellation, and restoration may be replaced with each other. It may be understood that after release, cancellation, or restoration, a constraint of the consistent LBT failure does not need to be considered for resource selection, resource allocation, or resource scheduling, or a constraint of the consistent LBT failure on the RB set does not need to be considered.

Embodiments may be independently implemented or implemented in combination based on some internal relationships. Optionally, each embodiment may be implemented in different implementations in a combined manner or independently.

In embodiments of this application, excluding a resource (a time domain resource, a frequency domain resource, or a time-frequency resource), not including a resource, or being different from a resource may be one of the following:
1. At a physical layer, when an initial candidate resource set is determined, the resource is not included.
2. At the physical layer, the candidate resource is excluded from a candidate resource set.
3. At a MAC layer, the resource is excluded from a candidate resource set reported by the physical layer, or a resource that does not overlap the resource is selected from the candidate resource set.

Optionally, excluding the resource may be excluding a candidate resource overlapping the resource. In embodiments of this application, resource overlapping may be any one of time domain resource overlapping, frequency domain resource overlapping, and time-frequency resource overlapping. The overlapping may be partial or complete overlapping. Alternatively, the resource overlapping may be a resource conflict.

In embodiments of this application, the described resource may be a time domain resource, a frequency domain resource, and/or a time-frequency resource. The time domain resource may be any one of one or more radio frames, subframes, slots, mini-slots, symbols, seconds, milliseconds, microseconds, or the like. The frequency domain resource may be any one of one or more REs, RBs, RB sets, interlaces, subchannels, RB sets, subcarriers, Hz, kHz, MHz, or the like.

In embodiments of this application, the (pre)configuration or preconfiguration may be any one or more of a predefinition, a configuration, an RRC parameter configuration, an SCI indication, a downlink control information (downlink control information, DCI) indication, or the like.

Definitions, concepts, or term explanations in embodiments of this application are applicable to the entire specification, and are not limited to embodiments or implementations in which the definitions are made.

It should be noted that the RB set is determined based on a (pre)configuration. Optionally, in this application, (pre)configuring of at least one of a start position, a quantity of included RBs, and an end position of the RB set is supported. Optionally, a bandwidth of one RB set is 20 MHz. The foregoing definitions or descriptions are applicable to all the following embodiments.

The following describes the communication method and the communication apparatus in embodiments of this application with reference to accompanying drawings.

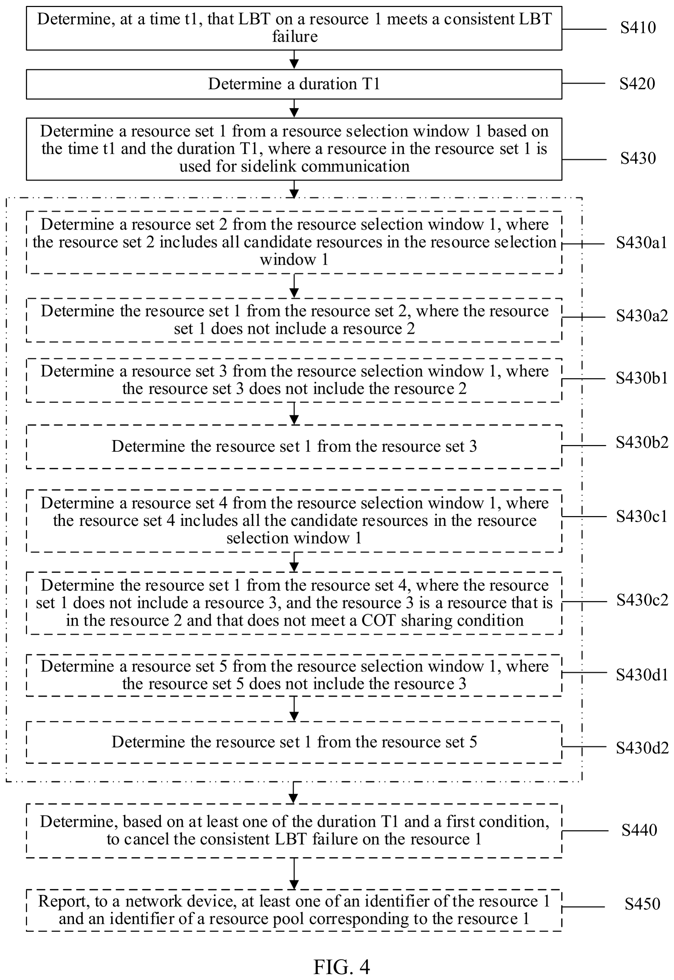

FIG. 4 is a diagram of a communication method 400 according to an embodiment of this application. The method 400 may be performed by a terminal device 100, or may be performed by a module and/or a component (for example, a chip or an integrated circuit) that is installed in the terminal device 100 and that has a corresponding function. This is not limited. The terminal device 100 may be a terminal device, a terminal apparatus, a chip or a module of a terminal device, or the like. This is not limited. As shown in FIG. 4, the method 400 includes the following steps.

S410. Determine, at a time t1 (for example, a first time), that LBT on a resource 1 (for example, a first resource) meets a consistent LBT failure.

Optionally, determining, at the time t1, that LBT on the resource 1 meets the consistent LBT failure may be determining that a time at which LBT on the resource 1 meets the consistent LBT failure is t1. Optionally, determining that LBT on the resource 1 meets the consistent LBT failure may be determining the consistent LBT failure on the resource 1.

Optionally, the time t1 is a moment t1 or a slot t1, or a moment at which it is determined that LBT on the resource 1 meets the consistent LBT failure is located in the slot t1.

Optionally, the determining may be replaced with triggering. Optionally, the determining may be performed by a MAC layer or a PHY layer. Optionally, the triggering means that the MAC layer triggers the PHY layer.

Optionally, the time t1 is a time at which the consistent LBT failure is triggered for the resource 1. The time may be the same as a time at which the consistent LBT failure is determined for the resource 1, or may be after the time at which the consistent LBT failure is determined for the resource 1. This is not limited.

Optionally, the resource 1 may be an RB set 1, an RP 1, or a BWP 1.

S420. Determine a duration T1 (for example, a first duration).

Optionally, the duration T1 may be a validity time or a lasting time of the consistent LBT failure. Optionally, the duration T1 may be a first time period at the PHY layer or a first timer at the MAC layer.

Optionally, the duration T1 is the first time period at the PHY layer, whose length is determined based on a preconfiguration, or is indicated by the MAC layer to the PHY layer, or is determined based on a channel occupancy ratio (channel occupancy ratio, CR) or a channel busy ratio (channel busy ratio, CBR) of the resource 1. Optionally, when the length is indicated by the MAC layer to the PHY layer, the MAC layer may indicate the length to the PHY layer when the MAC layer triggers the consistent LBT failure at the PHY layer. Optionally, when the length is determined based on the CR or the CBR of the resource 1, the CR or the CBR may be determined based on one or more of any transmission, sidelink transmission, or non-sidelink transmission on the resource 1. Optionally, the sidelink transmission is SL-U, and the non-sidelink transmission is transmission other than SL-U, for example, NR-U or Wi-Fi.

Optionally, the duration T1 is the first timer at the MAC layer, and may be determined based on a preconfiguration. Optionally, the duration T1 is determined based on an end position of the duration T1. Optionally, the end position of the duration T1 is indicated by the MAC layer. Optionally, after the first timer at the MAC layer expires, the MAC layer indicates, to the PHY layer, cancellation of the consistent LBT failure on the resource 1, that is, the end position of the duration T. Optionally, the end position of the duration T is a moment or a slot.

S430. Determine a resource set 1 (for example, a first resource set) from a resource selection window 1 based on the time t1 and the duration T1, where a resource in the resource set 1 is used for sidelink communication.

Optionally, the resource set 1 is a candidate resource set reported by the PHY layer to the MAC layer.

Optionally, that the resource in the resource set 1 is used for sidelink communication may be that the MAC layer selects, from the resource set 1, a resource used for sidelink transmission.

Specifically, the PHY layer of the terminal device 100 performs LBT on the resource 1 or a resource in the resource 1. Each time the PHY layer experiences one LBT failure on the resource 1 or the resource in the resource 1, the PHY layer reports one instance (instance) to the MAC layer. When the MAC layer receives the instance reported by the PHY layer, the MAC layer starts or restarts a timer, and sets a counter to 0. Before the timer expires, the counter maintained by the MAC layer is increased by one each time the MAC receives one LBT failure instance on the resource 1 or the resource in the resource 1. When the counter maintained by the MAC reaches a threshold, the MAC layer triggers the consistent LBT failure on the resource 1. If the timer expires, the counter is reset to 0.

Optionally, a moment or a slot in which the MAC layer starts or restarts the timer is t0. Optionally, a moment or a slot in which the MAC layer determines that LBT on the resource 1 meets the consistent LBT failure is t1, or a moment or a slot in which the MAC layer triggers the consistent LBT failure on the resource 1 is t1. Optionally, the terminal device 100 determines, at the time t1, that LBT on the resource 1 triggers the consistent LBT failure.

It may be understood that the "determining that LBT on the resource 1 meets the consistent LBT failure" may be as follows: A plurality of times of LBT initiated by the terminal device 100 on the resource 1 fail. The terminal device 100 may count a quantity of LBT failures on the resource 1, and when determining that the quantity of LBT failures on the resource 1 reaches a preconfigured threshold, the terminal device 100 determines that LBT on the resource 1 triggers or meets the consistent LBT failure.

Further, when the terminal device 100 determines, at the time t1, that LBT on the resource 1 meets or triggers the consistent LBT failure, the terminal device 100 determines the duration T1. In an example, the terminal device 100 determines, at the time t1 = a second 5:30, that LBT on the resource 1 triggers or meets the consistent LBT failure, and the terminal device 100 determines the duration T1 = 20 seconds. In this case, the consistent LBT failure on the resource 1 is valid within the second 5:30 to a second 5:50. Correspondingly, the terminal device 100 can determine the resource set 1 from the resource selection window 1 based on the time t1 and the duration T1. Specifically, the duration T1 is set and the resource set 1 is selected from the resource selection window 1 based on the time t1, so that a resource that is in the resource 1 and that corresponds to the duration T1 is excluded from the resource selection window 1, and selection of an inappropriate communication resource is avoided.

Different from a conventional technology in which the resource 1 cannot be used by the terminal device 100 if LBT on the resource 1 meets the consistent LBT failure, the duration T1 is set and the resource set 1 is determined from the resource selection window 1 with reference to the duration T and the time t1, which is equivalent to introducing a mechanism of restoring availability of the resource 1, so that utilization of a communication resource used for sidelink transmission can be effectively improved. For example, when the terminal device 100 determines the resource set 1 from the resource selection window 1, two factors, namely, the time t1 and the duration T1, are considered in combination. In this way, a time range within which the resource 1 cannot be used is defined, so that a case in which the resource 1 cannot continue to be used by the terminal device 100 ever can be avoided

Optionally, the PHY layer may be a lower layer or a low layer, and the MAC layer may be a higher layer or a high layer.

In this embodiment of this application, the terminal device 100 includes a lower layer or a low layer (for example, the PHY) and a higher layer or a high layer (for example, the MAC), and the lower layer and the higher layer respectively perform corresponding actions. For example, the lower layer reports each LBT failure instance (instance) on the resource 1 to the higher layer. Correspondingly, the higher layer maintains a counter, and counts, by using the counter, a quantity of LBT failures on the resource 1 that are reported by the lower layer. When the higher layer determines that the quantity counted by the counter reaches a threshold, the higher layer triggers the consistent LBT failure on the resource 1. Correspondingly, optionally, the higher layer configures a duration for the lower layer. In the duration, the consistent LBT failure on the resource 1 is valid. Alternatively, the higher layer maintains a timer, and within timing of the timer, the consistent LBT failure on the resource 1 is valid. This is described below. Optionally, the timer may alternatively be a timing counter.

In conclusion, when the terminal device 100 determines that the resource 1 in the resource selection window 1 triggers the consistent LBT failure, the terminal device 100 may determine the resource set 1 from the resource selection window 1 with reference to the duration T1 and the time t1, so that a resource, that is in the resource selection window, that is in the resource 1, and that corresponds to the time t1 and the duration T1 can be excluded, to avoid a case in which all resources of the resource 1 cannot be used by the terminal device 100, so that utilization of a resource used for sidelink transmission can be effectively improved.

For ease of description, the following uses an example in which the resource 1 is the RB set 1 for description.

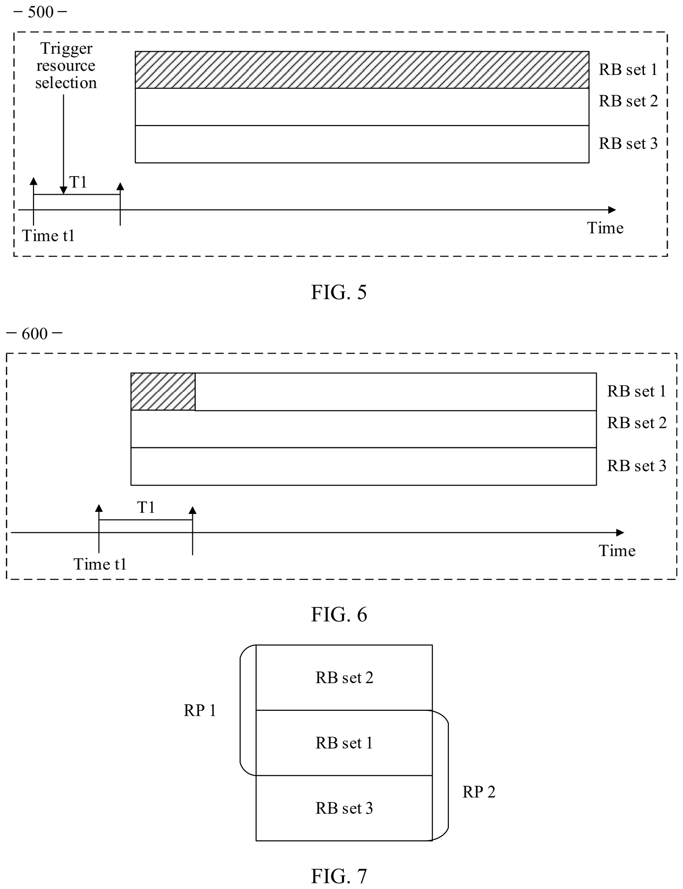

In a possible implementation, a slot in which resource selection is triggered and that corresponds to the resource selection window 1 is in the duration T starting from the time t1, and the resource set 1 does not include a resource that is in the resource selection window 1 and that corresponds to the RB set 1. For details, refer to FIG. 5. Optionally, that the resource set 1 does not include the resource that is in the resource selection window 1 and that corresponds to the RB set 1 may be that the resource set 1 does not include a candidate resource overlapping the resource that is in the resource selection window 1 and that corresponds to the RB set 1. Optionally, the slot in which resource selection is triggered and that corresponds to the resource selection window 1 is in the duration T1 starting from the time t1, and the resource set 1 does not include a resource other than a resource meeting channel occupancy time (channel occupancy time, COT) sharing in the resource that is in the resource selection window 1 and that corresponds to the RB set 1. In other words, the resource meeting COT sharing is an exception, and may be included in the resource set 1.

Optionally, the duration T1 is the first timer at the MAC layer, and may be determined based on a preconfiguration. Optionally, the duration T1 is determined based on the end position of the duration T1. Optionally, the end position of the duration T1 is indicated by the MAC layer. Optionally, after the first timer at the MAC layer expires, the MAC layer indicates, to the PHY layer, cancellation of the consistent LBT failure, that is, the end position of the duration T1. Optionally, the end position of the duration T1 is a moment or a slot. In this case, that the slot in which resource selection is triggered and that corresponds to the resource selection window 1 is in the duration T1 starting from the time t1 may mean that the slot in which resource selection is triggered and that corresponds to the resource selection window 1 is after the time t1, and no indication of cancellation of the consistent LBT failure on the RB set 1 has been received from the MAC layer, that is, before the MAC layer indicates cancellation of the consistent LBT failure on the RB set 1, or in other words, the RB set 1 is in the consistent LBT failure.

Optionally, if the slot in which resource selection is triggered and that corresponds to the resource selection window 1 is after the PHY layer receives, from the MAC layer, the indication of cancellation of the consistent LBT failure on the RB set 1, the resource set 1 may include the resource that is in the resource selection window 1 and that corresponds to the RB set 1, that is, no exclusion is required.

Optionally, if the slot in which resource selection is triggered and that corresponds to the resource selection window 1 is in the duration T1 starting from the time t1, and the indication of cancellation of the consistent LBT failure on the RB set 1 is received from the MAC layer or the MAC layer cancels the consistent LBT failure on the RB set 1 in a resource selection process or after a resource is selected and before transmission is performed on the selected resource, the PHY layer or the MAC layer performs resource selection or reselection. Optionally, during resource selection or reselection, the foregoing resource that is not included or is excluded may be selected. Optionally, that the foregoing resource that is not included or is excluded may be selected may mean that an initialized resource set includes the resource that is in the resource selection window 1 and that corresponds to the RB set 1, or the resource that is in the resource selection window 1 and that corresponds to the RB set 1 does not need to be excluded during resource exclusion, or the PHY layer or the MAC layer puts, back into the candidate resource set, the resource that is in the resource selection window 1 and that corresponds to the RB set 1.

FIG. 5 is a diagram of resource selection according to an embodiment of this application. As shown in FIG. 5, the slot in which the PHY layer of the terminal device 100 is triggered to perform resource selection is in the duration T starting from the time t1. When the terminal device 100 selects the resource set 1 from the resource selection window 1, the resource that is in the resource selection window 1 and that corresponds to the RB set 1 is excluded, and the resource set 1 does not include the resource corresponding to the RB set 1 (to be specific, a slash texture represents the excluded resource). In this way, the terminal device 100 can select an appropriate communication resource to perform sidelink transmission. Optionally, a subject that triggers the terminal device to perform resource selection is the MAC layer. Optionally, a subject that is triggered to perform resource selection and/or a subject that performs resource selection are/is the PHY layer.

Optionally, after the duration T1 starting from the time t1, it is determined to cancel the consistent LBT failure on the RB set 1, which may be that the slot in which resource selection is triggered and that corresponds to the resource selection window 1 is after the duration T1 starting from the time t1, and the resource set 1 may include or does not need to exclude the resource that is in the resource selection window 1 and that corresponds to the RB set 1.

In a possible implementation, the resource set 1 does not include a resource that is located in the resource selection window 1, that is in the duration T1 starting from the time t1, and that corresponds to the RB set 1. For details, refer to FIG. 6. Optionally, that the resource set 1 does not include the resource that is located in the resource selection window 1, that is in the duration T1 starting from the time t1, and that corresponds to the RB set 1 may be that the resource set 1 does not include a candidate resource overlapping the resource that is located in the resource selection window 1, that is in the duration T1 starting from the time t1, and that corresponds to the RB set 1. Optionally, the resource set 1 does not include a resource other than a resource meeting COT sharing in the resource that is located in the resource selection window 1, that is in the duration T1 starting from the time t1, and that corresponds to the RB set 1. In other words, the resource meeting COT sharing may be included in the resource set 1.

FIG. 6 is another diagram of resource selection according to an embodiment of this application. As shown in FIG. 6, when the terminal device 100 is triggered to perform resource selection, the terminal device 100 excludes a resource that is in the RB set 1, that is located in the resource selection window 1, and that is in the duration T1 starting from the time t1 (to be specific, a slash texture represents the excluded resource). In this way, the terminal device 100 can select an appropriate communication resource to perform sidelink transmission, and the RB set 1 is not completely excluded, so that utilization of a resource used for sidelink transmission can be effectively improved.

Optionally, after the duration T1 starting from the time t1, it is determined to cancel the consistent LBT failure on the RB set 1, which may be that the resource set 1 may include or does not need to exclude a resource that is located in the resource selection window 1, that is after the duration T1 starting from the time t1, and that corresponds to the RB set 1.

Optionally, the method 400 may include the following steps.

S430a1. Determine a resource set 2 (for example, a second resource set) from the resource selection window 1, where the resource set 2 includes all candidate resources in the resource selection window 1.

Optionally, the resource set 2 is an initialized candidate resource set. For descriptions of the initialized candidate resource set, refer to FIG. 2. Details are not described herein again.

S430a2. Determine the resource set 1 from the resource set 2, where the resource set 1 does not include a resource 2.

Specifically, the resource 2 includes: the resource that is located in the resource selection window 1, that is in the duration T1 starting from the time t1, and that corresponds to the RB set 1 (refer to FIG. 6), or the resource that is in the RB set 1 and that is in the resource selection window 1, where a slot in which resource selection is triggered and that corresponds to the resource selection window 1 is in the duration T1 starting from the time t1 (refer to FIG. 5).

Optionally, that the resource set 1 does not include the resource 2 may be that the resource set 1 does not include a candidate resource overlapping the resource 2. Optionally, the candidate resource is any one of a single-slot candidate resource, a single-slot candidate resource across a plurality of RB sets, a multi-slot candidate resource, or a multi-slot candidate resource across a plurality of RB sets. This is not limited herein.

Optionally, after resource exclusion, when a total quantity of remaining candidate resources is less than a specific quantity (that is, X*Mtotal, where Mtotal is a total quantity of resources in the resource selection window 1 or the resource set 2, and X is a decimal), the resource 2 or the resource overlapping the resource 2 is put back into the candidate resource set. Optionally, X is preconfigured, and a candidate value is 0%, 35%, or 50%. The descriptions are applicable to the following, and are not repeated below.

According to the foregoing technical solution, the terminal device 100 may determine the resource set 1 from the resource selection window.

Optionally, in a possible implementation, the method 400 may alternatively include the following steps.

S430b1. Determine a resource set 3 (for example, a second resource set) from the resource selection window 1, where the resource set 3 does not include the resource 2.

Optionally, the resource set 3 is an initialized candidate resource set. For descriptions of the initialized candidate resource set, refer to FIG. 2. Details are not described herein again. S430b2. Determine the resource set 1 from the resource set 3.

Specifically, the terminal device 100 determines the resource set 3 through S430b1, and determines the resource set 1 from the resource set 3 through S430b2. Because the resource set 3 does not include the resource 2, the resource set 1 does not include the resource 2.

Optionally, a resource that is in the resource 2 and that meets COT sharing may be included in the resource set 1. The resource meeting COT sharing means that the resource is located in a COT initiated by another terminal device, and the terminal device 100 or sidelink information of the terminal device 100 meets a sharing condition for using a resource in the COT.

Optionally, the sharing condition includes at least one of the following:
a channel access priority class (channel access priority class, CAPC) of the sidelink information of the terminal device 100 is not lower than a CAPC of sidelink information of the initiated COT;
a CAPC value of the sidelink information of the terminal device 100 is not greater than a CAPC value of the sidelink information of the initiated COT;
the CAPC of the sidelink information of the terminal device 100 is not lower than a CAPC in a COT sharing indication of the COT;
the CAPC value of the sidelink information of the terminal device 100 is not greater than a CAPC value in the COT sharing indication of the COT;
a source identifier and/or a destination identifier of the sidelink information of the terminal device 100 match/matches a source identifier and/or a destination identifier of sidelink information transmitted by the terminal device initiating the COT; or
the source identifier and/or the destination identifier of the sidelink information of the terminal device 100 match/matches a source identifier and/or a destination identifier in the COT sharing indication of the terminal device initiating the COT.

Optionally, when triggering resource selection, the MAC layer indicates, to the PHY, a source identifier and/or a destination identifier of to-be-transmitted sidelink transmission. This method may help the PHY layer to determine whether a resource meets the COT sharing condition. Optionally, the PHY layer reports information about all COTs or information about an available COT. Optionally, the information about the COT includes one or more of a start point of the COT, a duration or a remaining duration of the COT, a shareable resource in the COT, a CAPC in the COT, a destination identifier and/or a source identifier of sidelink transmission sent in the initiated COT, and a destination identifier and/or a source identifier in COT sharing indication information. Optionally, the MAC layer obtains a union set of the resource set 1 reported by the PHY layer and a resource of the available COT, or a shareable resource, or a resource overlapping the resource of the available COT, or a resource overlapping the shareable resource, and selects, from the union set, a resource used for transmission.

According to the foregoing technical solution, the terminal device may determine the resource set 1 from the resource selection window.

Optionally, in a possible implementation, the method 400 may alternatively include the following steps.

S430c1. Determine a resource set 4 from the resource selection window 1, where the resource set 4 includes all the candidate resources in the resource selection window 1.

Optionally, the resource set 4 is an initialized candidate resource set.

S430c2. Determine the resource set 1 from the resource set 4, where the resource set 1 does not include a resource 3, and the resource 3 is a resource that is in the resource 2 and that does not meet a COT sharing condition, or the resource 3 is a resource other than a resource that is in the resource 2 and that meets the COT sharing condition.

Specifically, the terminal device 100 determines the resource set 4 through S430c1, and determines the resource set 1 from the resource set 4 through S430c1. The resource set 1 does not include the resource 3.

It may be understood that when a resource in the resource 2 is a resource meeting the COT sharing condition, the resource can still be used by the terminal device 100. During resource selection, the terminal device 100 does not need to exclude the resource that is in the resource 2 and that meets the COT sharing condition.

Optionally, that the resource set 1 does not include the resource 3 may be that the resource set 1 does not include a candidate resource overlapping the resource 3. Optionally, the candidate resource is any one of a single-slot candidate resource, a single-slot candidate resource across a plurality of RB sets, a multi-slot candidate resource, or a multi-slot candidate resource across a plurality of RB sets. This is not limited herein.

Optionally, after resource exclusion, when a total quantity of remaining candidate resources is less than X*Mtotal, the resource 3 or the resource overlapping the resource 3 is put back into the candidate resource set. Optionally, X is preconfigured, and a candidate value is 0%, 35%, or 50%. According to the foregoing technical solution, the terminal device may determine the resource set 1 from the resource selection window.

Optionally, in a possible implementation, the method 400 may alternatively include the following steps.

S430d1. Determine a resource set 5 from the resource selection window 1, where the resource set 5 does not include a resource 3, and the resource 3 is a resource that is in the resource 2 and that does not meet a channel occupancy time sharing condition, or the resource 3 is a resource other than a resource that is in the resource 2 and that meets the COT sharing condition.

S430d2. Determine the resource set 1 from the resource set 5.

Specifically, the terminal device 100 determines the resource set 5 through S430d1, and determines the resource set 1 from the resource set 3 through S430d2. Because the resource set 3 does not include the resource 3, the resource set 1 does not include the resource 3.

In S430a1 to S430d1, when a quantity of resources in a candidate resource set (for example, the resource set 2, or the resource set 3 to the resource set 5) determined by the terminal device 100 from the resource selection window 1 is insufficient, the candidate resource set includes all the resources in the resource selection window 1. Correspondingly, the terminal device 100 directly determines the resource set 1 from the resource selection window 1.

Optionally, after the duration T1 starting from the time t1, that is, at the end position of the duration T1 starting from the time t1, the terminal device 100 determines to cancel the consistent LBT failure on the RB set 1. Correspondingly, a resource of the RB set 1 may be selected or used by the terminal device 100 again after the duration T1 starting from the time t1. For example, the resource that is located in the resource selection window 1, that is after the duration T1 starting from the time t1, and that corresponds to the RB set 1 may be selected, or the resource that is in the resource selection window 1 and that is in the RB set 1 may be selected, where the slot in which resource selection is triggered and that corresponds to the resource selection window 1 is after the duration T1 starting from the time t1.

According to the foregoing technical solution, the terminal device 100 may determine the resource set 1 from the resource selection window.

Optionally, the method 400 may alternatively include:
S440. Determine a resource set 1 (for example, a first resource set) from the resource selection window 1 based on at least one of the time t1, the duration T, and a first condition, where a resource in the resource set 1 is used for sidelink communication.

Optionally, S440 and S430 are optional parallel solutions.

In a possible implementation, the terminal device 100 determines, based on the first condition, to cancel the consistent LBT failure on the RB set 1. Specifically, when determining that the RB set 1 meets the first condition, the terminal device 100 determines to cancel the consistent LBT failure on the RB set 1.

Specifically, the first condition includes at least one of the following:
(a) In the duration T1 starting from the time t1, an accumulated quantity of times that a first channel busy ratio of the RB set 1 is less than a threshold 1 is greater than a threshold 2.
(b) In the duration T1 starting from the time t1, a second channel busy ratio of the RB set 1 is less than a threshold 3.

For (a), the terminal device 100 measures the first channel busy ratio in a slot of the RB set 1 every duration in the duration T1 starting from the time t1. The PHY layer of the terminal device 100 reports an instance to the MAC layer, the MAC layer maintains a timer and a timer, and the counter is used to count a quantity of times that the first channel busy ratio of the RB set 1 is less than the threshold 1. If a counted value of the counter reaches the threshold 2 in a specified duration of the timer, the terminal device 100 determines to cancel the consistent LBT failure on the RB set 1. Optionally, if the timer expires, and the counted value of the counter does not reach the threshold 2, the terminal device 100 may restart the timer, and reinitialize the counter. Optionally, in the duration T1 starting from t1+T1, the terminal device 100 determines whether an accumulated quantity of times that the first channel busy ratio of the RB set 1 is less than the threshold 1 is greater than the threshold 2, and so on.

The first channel busy ratio of the RB set 1 may be defined as follows: For a slot n, it is a ratio of a quantity of slots in which a received signal strength indicator (received signal strength indicator, RSSI) on the RB set 1 is less than the threshold 1 in a measurement window [n-a, n-1] to a total quantity of slots in the measurement window. A value of a is 100 or 100*2µ slots, and µ is a value representing a subcarrier spacing.

In an example, the moment or the slot in which the consistent LBT failure on the RB set 1 is triggered is a slot x, and the terminal device 100 measures the first channel busy ratio of the RB set 1 in a current slot every N slots, and performs counting depending on whether the first channel busy ratio is less than the threshold 1. For example, the first slot in which the first channel busy ratio of the RB set 1 is measured is a slot n+Y, and subsequent slots are slots n+Y, n+N+Y, n+2N+Y..., or subsequent slots are slots n+Y, n+(N+1)+Y, n+2(N+1)+Y... Optionally, N is a periodicity. In this application, preconfiguring of values of N and Y is supported. This is not limited. It is predefined that the value of N is one of 0, a, 1, or a+1, and the value of Y is one of 0, a, 1, or a+1. Alternatively, candidate values of N and Y are configured as follows: N = one or more of 0, a, 1, or a+1, and Y = one or more of 0, a, 1, or a+1.

For (b), the second channel busy ratio of the RB set 1 is less than the threshold 3. The second channel busy ratio of the RB set 1 is defined as a ratio of a quantity of slots in which an RSSI on the RB set 1 is lower than the threshold 4 to a total quantity of slots in a given measurement window or time period. For example, for the duration T starting from the time t1, the second channel busy ratio of the RB set 1 is a ratio of a quantity of slots in which an RSSI on the RB set 1 is lower than the threshold 4 to a total quantity of slots in all slots in the time period. Optionally, if the second channel busy ratio of the RB set 1 is greater than the threshold 3 in the duration T1 starting from the time t1, it is determined, in T1 starting from t1+T1, whether the second channel busy ratio of the RB set 1 is less than the threshold 3. Optionally, if the condition is met, the terminal device 100 determines to cancel the consistent LBT failure on the RB set 1; otherwise, the rest may be deduced by analogy.

Optionally, if the slot in which resource selection is triggered and that corresponds to the resource selection window 1 is in a consistent LBT failure period of the RB set 1, the resource set 1 does not include the resource that is in the resource selection window 1 and that corresponds to the RB set 1. It may be understood that, being in the consistent LBT failure period of the RB set 1 means being after the time t1 and before the consistent LBT failure on the RB set 1 is canceled. For a specific method and step, refer to the foregoing descriptions of S430. Details are not described herein again.

In a possible implementation, the terminal device 100 determines, based on the time t1, the duration T1, and the first condition, to cancel the consistent LBT failure on the RB set 1. Specifically, when the terminal device 100 determines that the RB set 1 meets the first condition, the terminal device 100 determines, at the end position of the duration T1 starting from the time t1 or after the duration T1 starting from the time t1, to cancel the consistent LBT failure on the RB set 1.

Specifically, the first condition includes:
(a) In the duration T1 starting from the time t1, an accumulated quantity of times that a first channel busy ratio of the RB set 1 is less than a threshold 1 is greater than a threshold 2.
(b) In the duration T1 starting from the time t1, a second channel busy ratio of the RB set 1 is less than a threshold 3.

For (a) and (b), refer to the foregoing descriptions. Details are not described herein again.

Optionally, if the slot in which resource selection is triggered and that corresponds to the resource selection window 1 is in the consistent LBT failure period of the RB set 1, the resource set 1 does not include the resource that is in the resource selection window 1 and that corresponds to the RB set 1. It may be understood that, being in the consistent LBT failure period of the RB set 1 means being after the time t1 and before the consistent LBT failure on the RB set 1 is canceled. For a specific method and step, refer to the foregoing descriptions of S430. Details are not described herein again.

Optionally, in this embodiment of this application, being less than and being less than or equal to may be replaced with each other, and being greater than and being greater than or equal to may be replaced with each other.

In conclusion, the terminal device 100 can determine, based on either or both of the first condition and the duration T1, to cancel the consistent LBT failure on the RB set 1. In this way, the resource 1 can be restored to continue to be used, so that utilization of a resource used for sidelink transmission can be effectively improved.

It should be noted that, in S430, a manner 1 is selection based on t1, T1, a time period at the PHY layer, and a resource at the PHY layer, and a manner 2 is selection based on t1, T1, a timer at the MAC layer, and the resource at the PHY layer. Correspondingly, only t1 and T1 are considered. To be specific, after t1+T1, the consistent LBT failure does not need to be considered for resource selection. In other words, the consistent LBT failure is canceled after t1+T1. In S440, a resource selection manner in the consistent LBT failure period (within the validity time) is designed. For an end position of the validity time, that is, a condition for canceling the consistent LBT failure, at least one of t1, T1, and the first condition is considered. Specifically, only the first condition is considered, and if the first condition is met, the consistent LBT failure is canceled immediately. Alternatively, t1, T1, and the first condition are considered at the same time, and only when the first condition is met and after t1+T1, the consistent LBT failure is canceled.

It should be further noted that S430 is essentially determining the end position of the validity time of the consistent LBT failure based on t1 and T1, that is, a condition/time for cancelling the consistent LBT failure, is t1+T1. Therefore, internal logic of S430 is the same as that of S440, which is as follows:
the MAC layer triggers a consistent LBT failure;
when the PHY layer or the MAC layer performs resource selection/exclusion, a resource (RP or RB set) subject to the consistent LBT failure cannot be selected in a consistent LBT failure period (within a validity time), where a start position, that is, a determining/triggering time, of the consistent LBT failure is t1, and an end position, that is, a cancellation time, is determined based on at least one of t1, T1 (a time period at the PHY or a timer at the MAC), and a first condition (that is, a cancellation condition); and
after the consistent LBT failure is canceled, the PHY layer or the MAC layer does not consider the consistent LBT failure during resource selection.

Optionally, the method 400 may further include:
S460. Report, to a network device, at least one of an identifier of the resource 1 and an identifier of an RP corresponding to the resource 1. In this way, the network device can avoid scheduling the resource 1 during scheduling.

Optionally, the method 400 may further include: The terminal device 100 sends sidelink information to a terminal device 200. Correspondingly, the terminal device 200 receives the sidelink information sent by the terminal device 100.

The following further describes the method 400.

Scenario #1: The MAC triggers the consistent LBT failure on the RB set 1 at the PHY. A moment/slot of the triggering is defined as a start point of the consistent LBT failure on the RB set 1, that is, the time t1.

Further, the MAC configures a first time period (that is, the duration T1) for the PHY. For descriptions of the first time period, refer to S420.

Optionally, the PHY of the terminal device 100 determines the resource set 1 from the resource selection window 1 based on at least one of the time t1, the duration T1, and (a) and (b) in the first condition, and/or determines to cancel the consistent LBT failure on the RB set 1. For specific descriptions, refer to the foregoing descriptions. Details are not described herein again.

Scenario #2: The MAC triggers the consistent LBT failure on the RB set 1 at the PHY. In addition, the MAC maintains a timer. Optionally, the maintaining may be starting or restarting. For specific descriptions, refer to the descriptions of S420.

Further, the terminal device 100 determines the resource set 1 from the resource selection window 1 based on S450a1 to S450d2.

Optionally, the PHY of the terminal device 100 determines the resource set 1 from the resource selection window 1 based on at least one of the time t1, the duration T1, and (a) and (b) in the first condition, and/or determines to cancel the consistent LBT failure on the RB set 1. For specific descriptions, refer to the foregoing descriptions. Details are not described herein again. Optionally, when determining to cancel the consistent LBT failure on the RB set 1, the PHY layer reports cancellation of the consistent LBT failure on the RB set 1 to the MAC layer.

Scenario #3: After determining to trigger the consistent LBT failure on the RB set 1, the MAC may maintain a timer. Optionally, the maintaining may be starting or restarting. Before the timer expires, each time resource selection is triggered, the MAC indicates an index of an available or unavailable RB set to the PHY. When performing the resource selection, the PHY excludes a resource that is in the resource selection window 1 and that is in the RB set 1, or a candidate resource overlapping the resource that is in the resource selection window 1 and that is in the RB set 1.

Optionally, before the timer expires, the RB set 1 is in the consistent LBT failure. Optionally, the available RB set is an RB set that is in an RP used for the resource selection and that is not in the consistent LBT failure at a moment or a slot in which the resource selection is triggered. Optionally, the unavailable RB set is an RB set that is in the RP used for the resource selection and that is in the consistent LBT failure at the moment or the slot in which the resource selection is triggered.

Optionally, a length of the timer is determined based on a configuration or a CR or a CBR of the RB set 1. For details, refer to the foregoing descriptions.

Optionally, it is determined, based on at least one of the time t1, the duration T1, and (a) and (b) in the first condition, to cancel the consistent LBT failure on the RB set 1. For specific descriptions, refer to the foregoing descriptions. Details are not described herein again.

Optionally, before the consistent LBT failure on the RB set 1 is canceled, when the MAC layer triggers resource selection at the PHY layer, an indicated available RB set does not include the RB set 1, or an indicated unavailable RB set includes the RB set 1.

Optionally, after the consistent LBT failure on the RB set 1 is canceled, when the MAC layer triggers resource selection at the PHY layer, an indicated available RB set includes the RB set 1, or an indicated unavailable RB set does not include the RB set 1.

Scenario #4: After determining to trigger the consistent LBT failure on the RB set 1, the MAC layer maintains a timer. The maintaining may be starting or restarting. When the MAC layer selects a resource from the candidate resource set reported by the PHY layer, before the timer expires, the MAC layer is not allowed to select a resource in the RB set 1, or a candidate resource overlapping any resource in the RB set 1; or the MAC layer is not allowed to select a resource that is in the RB set 1 and that is before a moment or a slot in which the timer expires in the RB set 1, or a candidate resource overlapping the resource that is in the RB set 1 and that is before the moment or the slot in which the timer expires in the RB set 1. A length of the timer may be determined based on a configuration or a CR or a CBR of the RB set 1. For details, refer to the foregoing descriptions.

Optionally, it is determined, based on at least one of the time t1, the duration T1, and (a) and (b) in the first condition, to cancel the consistent LBT failure on the RB set 1. For specific descriptions, refer to the foregoing descriptions. Details are not described herein again.

Optionally, when the MAC layer selects a resource from the candidate resource set reported by the PHY layer, before the consistent LBT failure on the RB set 1 is canceled, the MAC layer is not allowed to select a resource in the RB set 1, or a candidate resource overlapping any resource in the RB set 1; or the MAC layer is not allowed to select a resource that is in the RB set 1 and that is before a moment or a slot in which the consistent LBT failure is canceled in the RB set 1, or a candidate resource overlapping the resource that is in the RB set 1 and that is before the moment or the slot in which the consistent LBT failure is canceled in the RB set 1.

Optionally, when the MAC layer selects a resource from the candidate resource set reported by the PHY layer, if the consistent LBT failure on the RB set 1 is canceled, the MAC layer is allowed to select a resource in the RB set 1, or a candidate resource overlapping any resource in the RB set 1. Scenario #5: After the MAC layer determines to trigger the consistent LBT failure on the RB set 1, during resource selection, the PHY layer excludes, from the resource selection window 1, a resource of the RB set 1 or a candidate resource overlapping the resource of the RB set 1; or when the MAC layer selects a resource from the candidate resource set reported by the PHY layer, the MAC layer is not allowed to select the resource of the RB set 1 or the candidate resource overlapping the resource of the RB set 1.

Optionally, for the scenarios #1 to #5, that the MAC layer triggers the consistent LBT failure may mean that the MAC layer triggers or indicates the consistent LBT failure at the PHY layer.

It should be noted that, for the scenarios #1 to #5, when it is determined, based on at least one of t1, T1, and the first condition, to cancel the consistent LBT failure on the RB set 1, the PHY layer reports cancellation of the consistent LBT failure on the RB set 1 to the MAC layer, or the MAC layer indicates the PHY layer to cancel the consistent LBT failure on the RB set 1. For example, if it is determined, based on at least one of t1, the duration T1 being the time period at the PHY layer, and (b) in the first condition, to cancel the consistent LBT failure on the RB set 1, the PHY layer reports cancellation of the consistent LBT failure on the RB set 1 to the MAC layer. If it is determined, based on at least one of t1, the duration T1 being the timer at the MAC layer, and (a) in the first condition, to cancel the consistent LBT failure on the RB set 1, the MAC layer indicates the PHY layer to cancel the consistent LBT failure on the RB set 1.

Optionally, for the scenarios #1 to #5, any one of the scenarios may be implemented as a separate embodiment, and respective methods may be mutually referenced based on an internal relationship or a logical relationship.

Optionally, resource exclusion when the RB set 1 in the consistent LBT failure period may be performed by the MAC layer or the PHY layer. This is not limited. Optionally, that the RB set 1 is in the consistent LBT failure period means that the terminal device 100 has triggered and not canceled the consistent LBT failure on the RB set 1. For specific triggering and cancellation, refer to the foregoing descriptions. Details are not described herein again.

Optionally, when a resource selected or reserved by the terminal device 100 before the consistent LBT failure is triggered is located in the RB set 1, and the consistent LBT failure is triggered for the RB set 1 before sidelink transmission is performed on the selected or reserved resource; or when a resource selected or reserved by the terminal 100 before the consistent LBT failure is triggered is located in the RB set 1, the consistent LBT failure is triggered for the RB set 1 before sidelink transmission is performed on the selected or reserved resource, and the resource is within the validity time of the consistent LBT failure on the RB set 1, transmission on the resource may be abandoned, and a retransmission resource is used for transmission; or resource selection or reselection at the PHY layer or the MAC layer is triggered. Optionally, being within the validity time of the consistent LBT failure on the RB set 1 means that the terminal device 100 has triggered and not canceled the consistent LBT failure on the RB set 1. For specific triggering and cancellation, refer to the foregoing descriptions. Details are not described herein again. Optionally, if resource selection or reselection at the PHY layer or the MAC layer is triggered, for a resource selection criterion and/or a method for canceling the consistent LBT failure on the RB set 1, refer to the foregoing descriptions. Details are not described herein again. Optionally, if the selected or reserved resource meets a condition for sharing a COT initiated by another terminal device, resource selection or reselection may not be performed.

Optionally, if all RB sets in an RP are in a consistent LBT failure state, or a quantity of RB sets in the consistent LBT failure state reaches a threshold, when the MAC layer triggers resource selection, the MAC layer is not allowed to indicate the RP, or triggers a radio link failure (radio link failure, RLF), or triggers RLF recovery. Optionally, after a timer, in this application, cancellation of the consistent LBT failure state of the RP or all the RB sets in the RP is supported. A length of the timer may be preconfigured. Optionally, after the RLF is triggered, or the RLF recovery is triggered, or the RLF recovery is completed, the consistent LBT failure state of the RP or all the RB sets in the RP is canceled.

Optionally, the consistent LBT failure state, the consistent LBT failure, the consistent LBT failure period, the validity time of the consistent LBT failure, the lasting time of the consistent LBT failure, and the like may be replaced with each other.

Optionally, when a consistent LBT failure on an RB set in the RP is canceled, so that the condition in which "all the RB sets are in the consistent LBT failure state or the quantity of RB sets in the consistent LBT failure state reaches the threshold" is not met, the consistent LBT failure state of the RP or all the RB sets in the RP is canceled, that is, when the MAC layer triggers resource selection, the MAC layer is allowed to indicate the RP.

Optionally, a resource that is located in an available COT initiated by another terminal device and that meets a COT sharing condition is not constrained by the consistent LBT failure, that is, the resource does not need to be excluded. This step may be performed by the PHY layer. Alternatively, when triggering the PHY layer to perform resource selection, the MAC layer notifies the PHY layer of an ID of a to-be-sent data packet, so that the PHY layer determines whether the RB set 1 meets the condition for sharing the initiated COT. This step may alternatively be performed by the MAC layer. The PHY layer needs to report COT information (one or more of a duration/remaining duration, a shareable resource, a CAPC, and an ID) of the another terminal device to the MAC layer, so that the MAC layer determines whether the RB set 1 meets the condition for sharing the initiated COT. For details, refer to descriptions in S400. Details are not described herein again.

Optionally, when an RB set is in a consistent LBT failure period, in this application, channel access attempted through Type2 LBT and sidelink transmission performed after the channel access succeeds are supported. Optionally, the transmission accesses a shared COT resource through Type2 LBT. Optionally, the sidelink transmission is one or more of a PSFCH, a PSSCH/PSCCH, and a sidelink synchronization signal and physical broadcast channel block (sidelink synchronization signal and physical broadcast channel block, S-SSB). Optionally, the S-SSB belongs to short control signaling (short control signaling) access, that is, meets a duty cycle requirement and/or a transmission duration requirement. Optionally, the duty cycle requirement is that a ratio of a duration in which the sidelink transmission is performed in a specific duration to the specific duration is lower than a threshold.

Optionally, a frequency domain position on a sending occasion (occasion) of the S-SSB is determined to be on a first RB set based on a preconfiguration. If the first RB set is in the consistent LBT failure state, the frequency domain position on the sending occasion of the S-SSB needs to be on a second RB set. A position or an index of the second RB set may be determined based on the first RB set, or may be (pre)configured, or may be randomly determined in another RB set, or may be determined based on a UE ID or a sidelink synchronization signal (sidelink synchronization signal, SLSS) ID. For example, based on an ID, it is determined as follows: Index of an RB set for sending the S-SSB = (ID) mod (Total quantity of RB sets). Optionally, the ID is an ID that includes the first RB set, and the total quantity of RB sets is a total quantity that includes the first RB set. Alternatively, the ID is an ID that does not include the first RB set, and the total quantity of RB sets is a total quantity that does not include the first RB set.

Optionally, in this application, discarding of transmission of Type1 LBT is supported. Optionally, for a physical sidelink feedback channel (physical sidelink feedback channel, PSFCH) of Type1 LBT, a resource in COT sharing cannot be used.

Optionally, an S-SSB of Type1 LBT does not meet one or more of the following conditions: a duty cycle requirement; a transmission duration requirement; or a resource in COT sharing cannot be used, that is, not located in a shareable COT.

Optionally, for determining of a consistent LBT failure, when the PHY layer reports an LBT failure instance to the MAC layer, and/or the MAC layer triggers the consistent LBT failure at the PHY layer, and/or the MAC layer cancels the consistent LBT failure at the PHY layer, and/or the PHY layer reports cancellation of the consistent LBT failure to the MAC layer, and/or the terminal device 100 indicates, to the network device 110, that the consistent LBT failure is triggered, and/or the terminal device 100 indicates, to the network device 100, that the consistent LBT failure is canceled, and/or the terminal device 100 reports a NACK to the network device 110, one of the following manners may be used: an RP identifier and an RB set identifier; or an RB set identifier. Optionally, for the RP identifier and the RB set identifier, the RB set identifier may be an index of an RB set in an RP in which the RB set is located or an RP in which the determined consistent LBT failure is located. Optionally, for the RB set identifier, the RB set identifier may be a physical index or an absolute index, that is, an index unrelated to the RP in which the RB set is located, or may be an index obtained through cross-RP numbering. In this way, the terminal device 100 or the network device 110 can determine a resource for which the consistent LBT failure is triggered.

Optionally, a granularity at which the PHY layer reports an LBT failure instance and/or the MAC layer maintains a timer of a counter for a consistent LBT failure is either of the following: each RB set; or each RB set in each RP. Optionally, for the granularity of each RB set, when a consistent LBT failure is determined for an RB set, the RB set is subject to the consistent LBT failure in any RP. Optionally, for each RB set in each RP, after a consistent LBT failure is determined for an RB set in an RP, the RB set only in the corresponding specific RP is subject to the consistent LBT failure. In other words, the same RB set in another RP is not determined to be subject to the consistent LBT failure. For details, refer to FIG. 7.

FIG. 7 is a diagram of a relationship between an RB set and an RP according to an embodiment of this application. As shown in FIG. 7, the RB set 1 belongs to an RP 1 and an RP 2. When the RB set granularity is used, when the PHY layer detects an LBT failure on the RB set 1 through measurement, the PHY layer reports the LBT failure to the MAC layer, and the MAC layer maintains a timer and a counter for the RB set 1. Neither the PHY layer nor the MAC layer needs to distinguish an RP in which the RB set 1 is located. When it is determined that the RB set 1 meets a consistent LBT failure, the PHY layer or the MAC layer determines that the RB set 1 meets the consistent LBT failure. When the granularity of each RB of each RP is used, when the PHY layer detects an LBT failure on the RB set 1 in the RP 1 through measurement, the PHY layer reports the RP 1 + the RB set 1 to the MAC layer. When the PHY layer detects an LBT failure on the RB set 1 in the RP 2 through measurement, the PHY layer reports the RP 2 + the RB set 1 to the MAC layer. The MAC layer maintains a timer and a counter in each case. If it is determined that the RB set 1 in the RP 1 meets a consistent LBT failure, the consistent LBT failure is triggered for the RB set 1 only in the RP 1, and use of the RB set 1 in the RP 2 is not affected.

Optionally, for determining of a consistent LBT failure, in an example in which the PHY layer reports an LBT failure to the MAC layer, one of the following manners is used:
1. When an LBT failure occurs on a physical sidelink data channel (physical sidelink shared channel, PSSCH)/physical sidelink control channel (physical sidelink control channel, PSCCH), an instance (instance) is reported.
2. When a Type1 LBT failure occurs in any SL transmission, an instance (instance) is reported.
3. When a Type1 LBT failure occurs on a PSSCH/PSCCH, an instance (instance) is reported.
4. When an LBT failure occurs on a PSSCH/PSCCH or a PSFCH, an instance (instance) is reported.
5. When a Type1 LBT failure occurs on a PSSCH/PSCCH or a PSFCH, an instance (instance) is reported.
6. When a Type1 LBT failure occurs in any SL transmission (a PSSCH, a PSCCH, an S-SSB, or a PSFCH), an instance (instance) is reported.
7. When an LBT failure occurs in any SL transmission (a PSSCH, a PSCCH, an S-SSB, or a PSFCH), an instance (instance) is reported.

The foregoing content is described by using an example in which the resource 1 is the RB set 1. The following describes a scenario in which the resource 1 is the RP 1.

Specifically, after the MAC layer determines that the RP 1 triggers a consistent LBT failure, the terminal device 100 determines not to use the RP 1. In other words, when the MAC layer triggers resource selection at the PHY layer, the MAC layer is not allowed to indicate the RP 1.

Optionally, after determining that the RP 1 triggers the consistent LBT failure, the terminal device 100 determines, based on any one of the following conditions, to cancel the consistent LBT failure on the RP 1:
(1) A timer at the MAC layer expires. Optionally, the timer is started or restarted when it is determined that the RP 1 triggers the consistent LBT failure. Optionally, a length of the timer is determined based on a preconfiguration or a CR or a CBR of the RP 1.
(2) A first condition is met. For descriptions of the first condition, refer to the foregoing descriptions. Details are not described herein again. It should be noted that, a measurement granularity of a first channel busy ratio in frequency domain is an RB set in the foregoing first condition, while the measurement granularity of the first channel busy ratio in frequency domain is an RP herein.

Optionally, when the consistent LBT failure on the RP 1 has been determined and not canceled, the MAC layer is not allowed to indicate the RP 1 when triggering the PHY layer to perform resource selection. Optionally, after the consistent LBT failure on the RP 1 is canceled, the MAC layer may indicate the RP 1 when triggering the PHY layer to perform resource selection.

Optionally, after the MAC layer determines that the RP 1 triggers the consistent LBT failure, in this application, triggering of a radio resource control (radio resource control, RRC) link reconfiguration, and/or reconfiguring of at least one transmit resource pool TxRP and/or at least one receive resource pool RxRP are/is supported. If one TxRP is configured, the TxRP is different from an original TxRP, that is, the RP 1. The difference means that a resource is completely different or partially different, and the resource is a time domain resource, a frequency domain resource, or a time-frequency resource.

Optionally, before the reconfiguration, there is only one TxRP, that is, the RP 1.

Optionally, after the reconfiguration, the consistent LBT failure state of the original TxRP, that is, the RP 1, is canceled immediately.

Optionally, if a plurality of TxRPs are configured, the original TxRP may or may not be included. If the original TxRP is included, the consistent LBT failure on the original TxRP is canceled after a period of time. Optionally, for a cancellation manner, refer to the previous RP restoration mechanism, that is, the timer or the first condition. If the original TxRP is not included, the consistent LBT failure on the original TxRP is canceled immediately. The cancellation may be replaced with release, restoration, or the like. This is noted herein once for all, and is not repeated below.

Optionally, the at least one reconfigured RxRP includes the at least one TxRP.

Optionally, after the MAC layer determines that the RP 1 triggers the consistent LBT failure, in this application, triggering of RP switching to switch to a new RP is supported, where the new RP is an additionally configured candidate RP. The terminal device 100 may indicate a switched-to TxRP to another terminal device by using one or more of a PSSCH, a PSCCH (first-stage SCI), second-stage SCI, a MAC CE, or PC5 RRC.

Optionally, the another terminal device that receives the indication adds the TxRP as an RxRP of the another terminal device.

Optionally, when a resource selected or reserved by the terminal device 100 before the consistent LBT failure is triggered is located in the RP 1, and the consistent LBT failure is triggered for the RP 1 before sidelink transmission is performed on the selected or reserved resource; or when a resource selected or reserved by the terminal device 100 before the consistent LBT failure is triggered is located in the RP 1, the consistent LBT failure is triggered for the RP 1 before sidelink transmission is performed on the selected or reserved resource, and the resource is within a validity time of the consistent LBT failure on the RP 1, transmission on the resource may be abandoned, and a retransmission resource is used for transmission; or resource selection or reselection at the PHY layer or the MAC layer is triggered.

Optionally, being within the validity time of the consistent LBT failure on the RB set 1 means that the terminal device 100 has triggered and not canceled the consistent LBT failure on the RB set 1. For specific triggering and cancellation, refer to the foregoing descriptions. Details are not described herein again. Optionally, if resource selection or reselection at the PHY layer or the MAC layer is triggered, for a resource selection criterion and/or a method for canceling the consistent LBT failure on the RP 1, refer to the foregoing descriptions. Details are not described herein again.

Optionally, if the selected or reserved resource meets a condition for sharing a COT initiated by another terminal device, resource selection or reselection may not be performed.

According to the foregoing solution, in this application, for a scenario of a consistent LBT failure, a new condition/criterion is designed for resource exclusion/resource selection at the PHY layer or the MAC layer, to preferentially select another more idle resource, thereby avoiding an LBT failure and frequent resource selection or reselection caused by selection of a resource subject to the consistent LBT failure. In addition, a restoration mechanism is determined by introducing a new duration constraint at the PHY or introducing a new timer at the MAC, to ensure that when a condition is met, the resource determined to be subject to the consistent LBT failure can be restored to be available, thereby improving resource utilization. In addition, a put-back mechanism is designed to ensure that the resource can still be selected for sidelink transmission when no sufficient resources are available.

The following further describes another communication method in embodiments of this application with reference to another accompanying drawing.

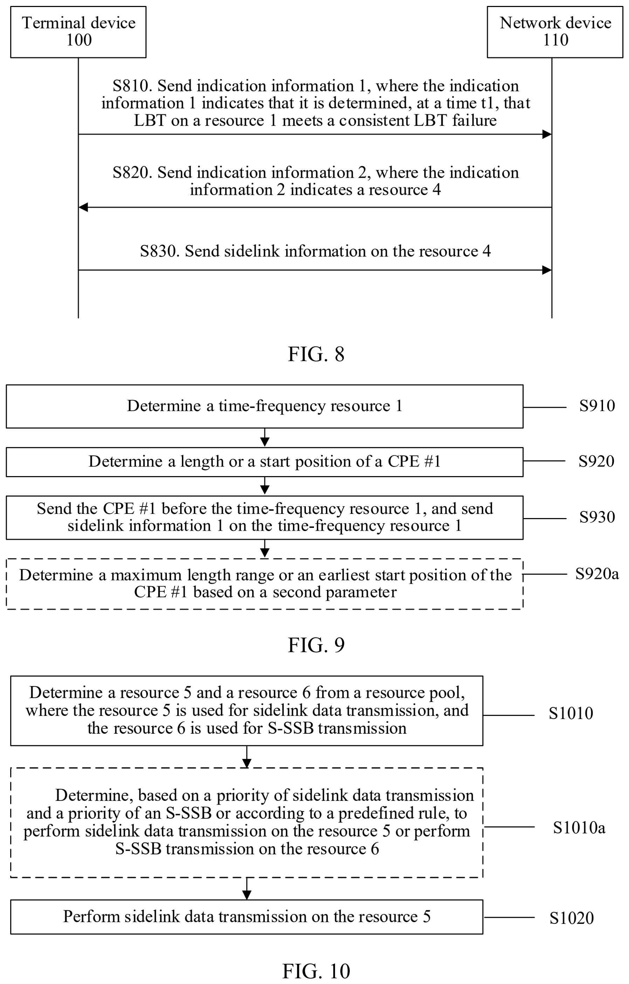

FIG. 8 is a schematic interaction flowchart of a communication method 800 according to an embodiment of this application. The method 800 may be performed by a terminal device 100 and a network device 110, or may be performed by modules and/or components (for example, chips or integrated circuits) that are installed in the terminal device 100 and the network device 110 and that have corresponding functions. This is not limited. The terminal device 100 may be a terminal device, a terminal apparatus, a chip or a module of a terminal device, or the like. This is not limited. The method 800 includes the following steps.

S810. The terminal device 100 sends indication information 1 (for example, first indication information) to the network device 110, where the indication information 1 indicates that it is determined, at a time t2 (for example, a first time), that LBT on a resource 1 (for example, a first resource) meets a consistent LBT failure.

Optionally, determining, at the time t2, that LBT on the resource 1 meets the consistent LBT failure may be determining that a moment or a slot in which LBT on the resource 1 meets the consistent LBT failure is 2, or a moment or a slot in which the terminal device 100 sends the indication information 1 to the network device 110 is t2, or a moment or a slot in which the network device 110 receives the indication information 1 from the terminal device 100 is t2.

Correspondingly, the network device 110 receives the indication information 1 from the terminal device 100, and determines, based on the indication information 1, that the terminal device 100 determines, at the time t2, that LBT on the resource 1 meets the consistent LBT failure.

Optionally, the indication information 1 sent by the terminal device 100 to the network device 110 may indicate the network device 110 not to allocate or indicate any resource in the resource 1 or a resource overlapping the any resource in the resource 1 when allocating or indicating a transmission resource to the terminal device 100; or indicate that the terminal device 100 does not expect to be allocated or indicated any resource in the resource 1 or a resource overlapping the any resource in the resource 1.

Optionally, the indication information 1 sent by the terminal device 100 to the network device 110 may indicate the network device 110 not to allocate any resource in the resource 1 or a resource overlapping the any resource in the resource 1 when allocating or indicating a transmission resource to the terminal device 100 in a consistent LBT failure period; or indicate that the terminal device 100 in the consistent LBT failure period does not expect to be allocated any resource that is in the resource 1 and that is in the consistent LBT failure period or a resource overlapping the any resource in the resource 1.

Optionally, the indication information 1 sent by the terminal device 100 to the network device 110 may indicate the network device 110 not to allocate or indicate any resource that is in the resource 1 and that is in a consistent LBT failure period or a resource overlapping the any resource that is in the resource 1 and that is in the consistent LBT failure period when allocating or indicating a transmission resource to the terminal device 100; or indicate that the terminal device 100 does not expect to be allocated or indicated any resource that is in the resource 1 and that is in the consistent LBT failure period or a resource overlapping the any resource that is in the resource 1 and that is in the consistent LBT failure period.

Optionally, the consistent LBT failure period means after the consistent LBT failure is determined and before the consistent LBT failure is canceled.

Optionally, the network device 110 determines, based on at least one of the time t2, a duration T2, and indication information 3 (for example, third indication information) of the terminal device 100, to cancel the consistent LBT failure on the resource 1. Optionally, a condition for determining to cancel the consistent LBT failure on the resource 1 is either or both of the following:
determining, after the duration T2 starting from the time t2, to cancel the consistent LBT failure on the resource 1; and
after the indication information 3 from the terminal device 100 is received, where the indication information 3 is used to cancel the consistent LBT failure on the resource 1.

Optionally, after receiving the indication information 1, the network device 110 determines the duration T2. Optionally, the duration T2 may be a time period at a PHY layer or a timer at a MAC layer. Optionally, the timer at the MAC layer is maintained by the network device 110. The duration T2 may be (pre)configured or predefined in a protocol. Optionally, the timer maintained at the MAC layer may be understood as follows: After receiving the indication information 1 from the terminal device 100, the network device 110 starts the timer. After the timer expires, the network device 110 determines to cancel the consistent LBT failure on the resource 1.

Optionally, the terminal device 100 sends the indication information 3 to the network device 110 after determining, based on a method and a condition that are described in the method 400, to cancel the consistent LBT failure on the resource 1.

Optionally, the resource 1 is an RB set 1, an RP 1, or a BWP 1.

S820. The network device 110 sends indication information 2 to the terminal device 100, where the indication information 2 indicates a resource 4 (for example, a second resource). Correspondingly, the terminal device 100 receives the indication information 2 from the network device 110, and determines the resource 4 based on the indication information 2. It may be understood that the resource 4 needs to meet the descriptions in S810. For details, refer to the foregoing descriptions.

S830. The terminal device 100 sends sidelink information on the resource 4.

Specifically, the terminal device 100 transmits the sidelink information on the resource 4. Correspondingly, a terminal device 200 may receive the sidelink information that is sent by the terminal device 100 on the resource 4.

In the foregoing technical solution, a communication resource used by the terminal device 100 to perform sidelink transmission is scheduled and indicated by the network device 110. When the terminal device 100 determines that the resource 1 triggers or meets the consistent LBT failure, the terminal device 100 may send the indication information 1 to the network device 110, so that the network device 110 configures or indicates a resource for the terminal device 100 based on at least one of the time t2, the duration T2, and the indication information 3 of the terminal device. According to the foregoing technical solution, in this application, a signaling exchange and scheduling constraint between the terminal device 100 and the network device 110 is defined, to ensure that the network device 110 preferentially allocates a more idle resource to the terminal device 100, avoid an LBT failure of the terminal device 100 caused by selection of a resource in a consistent LBT failure state, and avoid a long delay and high signaling overheads caused by frequent NACK feedback of the terminal device 100 to the network device 110 and rescheduling of the network device 110.

Optionally, when the terminal device 100 is allocated a resource in the resource 1 by the network device 110 before the consistent LBT failure is triggered, and the consistent LBT failure is triggered for the resource 1 before sidelink transmission is performed on the allocated resource; or when the terminal device 100 is allocated a resource in the resource 1 by the network device 110 before the consistent LBT failure is triggered, the consistent LBT failure is triggered for the resource 1 before sidelink transmission is performed on the allocated resource, and the resource is within a validity time of the consistent LBT failure on the resource 1, transmission on the resource may be abandoned, and a retransmission resource is used for transmission; or the transmission is abandoned, and a NACK is reported to the network device 110 on a corresponding PUCCH resource; or a request message is sent to the network device 110, where the request message is used to request the network device 110 to reallocate a resource, or allocate a transmission resource, or allocate a new transmission resource.

Optionally, being within the validity time of the consistent LBT failure on the RB set 1 means that the terminal device 100 has triggered and not canceled the consistent LBT failure on the RB set 1. For specific triggering and cancellation, refer to the foregoing descriptions. Details are not described herein again.

Optionally, if resource selection or reselection at the PHY layer or the MAC layer is triggered, for a resource selection criterion and/or a method for canceling the consistent LBT failure on the RB set 1, refer to the foregoing descriptions. Details are not described herein again. Optionally, if the selected or reserved resource meets a condition for sharing a COT initiated by another terminal device, resource selection or reselection may not be performed.

Optionally, the foregoing manner is applicable to scenarios in which the resource 1 is the RB set 1 and/or the resource 1 is the RP 1.

Optionally, for the scenario in which the resource 1 is the RP 1, refer to related descriptions of the scenario in which the resource 1 is located in the RP 1 in the method 400, which is used in combination with the method 800.

For specific content of determining, by the terminal device 100 at the time t1, that LBT on the resource 1 meets the consistent LBT failure, refer to descriptions of the method 400. Details are not described herein again. Other content in the method 400 is also applicable to the method 800. For example, for content of the RP 1/RB set 1 and a process in which the network device 110 determines the resource 4 based on the time t1 and the duration T, refer to the descriptions of determining, by the terminal device 100, the resource set 1 in the method 400. Details are not described herein again.

It should be noted that a difference between the method 400 and the method 800 is as follows: In the method 400, after the terminal device 100 determines that LBT on the resource 1 meets the consistent LBT failure, the terminal device 100 needs to determine the resource set 1 from the resource selection window 1 based on the duration T and the time t1, to determine a resource used by the terminal device 100 to perform sidelink transmission. In the method 800, after the terminal device 100 determines that an LBT failure on the resource 1 meets the consistent LBT failure, the terminal device 100 sends the indication information 1 to the network device 100, and the network device 110 reconfigures a resource for the terminal device 100. In addition, other content in the method 400 may be common to the method 800.

The following describes another communication method in embodiments of this application with reference to another accompanying drawing.

Specifically, a cyclic prefix extension (cyclic prefix extension, CPE) is introduced in SL-U communication to achieve some objectives. For example, CPEs of a same terminal device on a same time domain resource of an RB set are aligned, to avoid mutual LBT blocking when a plurality of transmissions are performed in a same RB set through frequency division multiplexing (frequency division multiplexing, FDM). CPEs of a same terminal device on a same time domain resource of a same RB set or different RB sets are aligned, to ensure that half-duplex does not occur. When a resource conflict occurs, it needs to be ensured as much as possible that a terminal device or transmission with a higher priority or more importance can preferentially access a channel, that is, a longer CPE is needed. However, how to determine an appropriate length of a CPE is an urgent technical problem to be resolved currently.

FIG. 9 is a diagram of a communication method 900 according to an embodiment of this application. The method 900 may be performed by a terminal device 100, or may be performed by a module and/or a component (for example, a chip or an integrated circuit) that is installed in the terminal device 100 and that has a corresponding function. This is not limited. The terminal device 100 may be a terminal device, a terminal apparatus, a chip or a module in a terminal device, or the like. The method 900 includes the following steps.

S910. Determine a time-frequency resource 1 (for example, a first time-frequency resource).

Specifically, the time-frequency resource 1 is used to transmit sidelink information 1 (for example, first sidelink information) of the terminal device 100. The time-frequency resource 1 is any one of at least one symbol, at least one slot, or at least one subframe in time domain. This is not limited. S920. Determine a length or a start position of a CPE #1 (for example, a first CPE).

Specifically, the terminal device 100 determines the length or the start position of the CPE #1 in the following manner.

Optionally, the terminal device 100 determines the length or the start position of the CPE # 1 based on a first parameter in a first manner.

Optionally, the first parameter includes at least one of the following:
a position of the time-frequency resource 1 in a COT,
a type of a frequency domain resource of the time-frequency resource 1,
whether a time-frequency resource 2 reserved by a terminal device 200 and the time-frequency resource 1 meet frequency division multiplexing, where the time-frequency resource 2 is used by the terminal device 200 to transmit sidelink information 2,
whether the time-frequency resource 2 and the time-frequency resource 1 overlap in frequency domain,
a priority of the sidelink information 1,
a transmission type of the sidelink information 1,
a length range of the CPE #1,
a priority of the sidelink information 2,
a length range of a CPE #2 (for example, corresponding to the sidelink information 2),
an identifier of the CPE #2, or
a length or a start position of the CPE #2.

Optionally, the sidelink information 1 and/or the sidelink information 2 may be any one of an S-SSB, a PSSCH, and/or a PSCCH.

Optionally, the position of the time domain resource 1 in the COT includes: the time-frequency resource 1 is a resource on which a COT is initiated for transmission, or the time-frequency resource 1 is a resource within a COT.

Optionally, that the time-frequency resource 1 is a resource on which a COT is initiated for transmission means that in an RB set, the sidelink information 1 is not located within a lasting time of a COT initiated by another terminal device, or the terminal device 100 initiates a COT on a same time domain resource as the another terminal device, that is, the first slot of the COT.

Optionally, that the time-frequency resource 1 is a resource within a COT means that in an RB set, the sidelink information 1 is located within a lasting time of a COT initiated by another terminal device, and is not in the first slot of the COT.

Optionally, the length range of the CPE #1 and/or the length range of the CPE #2 include/includes:
a length range 1:
within a symbol before a next automatic gain control (automatic gain control, AGC) symbol (within the symbol just before the next AGC symbol); or
a length range 2:
   within a symbol before a next AGC symbol when a subcarrier spacing (subcarrier spacing, SCS) is 15 kHz (within the symbol just before the next AGC symbol for 15 kHz SCS); or
   within at most two symbols before a next AGC symbol when an SCS is a 30 or 60 kHz SCS (within at most 2 symbols just before the next AGC symbol for 30 or 60 kHz SCS).

Optionally, the length range may alternatively be referred to as any one of a maximum length, a maximum length range, an earliest start position, and a start position range. Optionally, the length range means that the CPE needs to be determined within the range. Optionally, the start position range means that an earliest start position of a CPE needs not to exceed the range.

Optionally, the type of the frequency domain resource of the time domain resource 1 includes: occupying a partial RB set (partial RB set), that is, occupying only a part of resources in an RB set; or occupying a full RB set (full RB set), that is, occupying all resources in an RB set.

Optionally, whether the time-frequency resource 2 and the time-frequency resource 1 meet frequency division multiplexing may be understood as follows: If the time-frequency resource 2 and the time-frequency resource 1 overlap in time domain, and are different frequency domain resources in a same RB set in frequency domain, it is considered that frequency division multiplexing is met; otherwise, it is considered that frequency division multiplexing is not met.

Optionally, whether the time-frequency resource 2 and the time-frequency resource 1 overlap in frequency domain may be understood as follows: If frequency domain resources of the time-frequency resource 2 and the time-frequency resource 1 are partially or completely the same, it is considered that the time-frequency resource 2 and the time-frequency resource 1 overlap in frequency domain; otherwise, it is considered that the time-frequency resource 2 and the time-frequency resource 1 do not overlap in frequency domain. Optionally, the time-frequency resource 2 and the time-frequency resource 1 overlap in time domain.

Optionally, the transmission type of the sidelink information 1 includes initial transmission or retransmission. Optionally, the initial transmission is the first transmission of a current transport block, or transmission performed on a time-frequency resource that is not reserved. Optionally, the retransmission is non-first transmission of the current transport block, or transmission performed on a reserved time-frequency resource.

Optionally, the priority of the sidelink information 1 and/or the priority of the sidelink information 2 include/includes: a layer 1 (L1) priority, that is, a physical layer priority, and/or a channel access priority class CPAC.

Optionally, the identifier of the CPE #2 is an identifier of the length or the start position of the CPE, that is, there is a correspondence between the identifier and the CPE length or start position. For example, the identifier is an index of the length or the start position. Optionally, for the CPE length range 1 and length range 2, the correspondence between the identifier and the CPE length or start position may be different. Optionally, the correspondence between the identifier and the CPE length or start position is absolute, that is, each identifier corresponds to a determined CPE length or start position. It may be understood as that the identifier is unrelated to the CPE length range.

Optionally, the length or the start position of the CPE #2 is an absolute CPE length or start position. It may be understood as that the length or the start position is unrelated to the CPE length range. Optionally, the first manner includes: determining based on a preconfiguration, determining based on the priority of the sidelink information 1, determining based on the length or the start position of the CPE #2, determining based on indication information of a terminal device that initiates the COT, and randomly determining from one or more candidate values.

Optionally, the length range of the CPE is determined depending on whether a time-frequency resource on which corresponding transmission is performed is a resource on which a COT is initiated for transmission or a resource within a COT. Optionally, when the time-frequency resource 1 is a resource on which a COT is initiated for transmission, the length range of the CPE #1 is the length range 2. Optionally, when the time-frequency resource 1 is a resource within a COT, the length range of the CPE #1 is the length range 1.

Optionally, the length range of the CPE is autonomously determined by the terminal device, or is determined based on implementation of the terminal device.

Optionally, when an interval between an end symbol of a sidelink resource in a previous slot and a start symbol of a sidelink resource in a current slot is greater than or equal to one symbol, the length range of the CPE #1 is the length range 2. Optionally, when the interval between the end symbol of the sidelink resource in the previous slot and the start symbol of the sidelink resource in the current slot is 0 symbols, the length range of the CPE #1 is determined based on the foregoing method. Optionally, that the interval is 0 symbols means that all symbols in the slots are sidelink resources. Optionally, a symbol of the sidelink resource includes a symbol for AGC or PSSCH/PSCCH transmission and/or a GAP symbol.

Optionally, the length range of the CPE is indicated by the terminal device by using one of first-stage SCI, second-stage SCI, or a MAC control element (control element, CE). For example, the length range of the CPE #2 is indicated by the terminal device 200.

Optionally, the length range of the CPE is determined depending on whether other sidelink transmission is performed in a slot previous to a time-frequency resource on which corresponding transmission is performed. If sidelink transmission is performed in a slot previous to the time-frequency resource 1, the length range of the CPE #1 is the length range 1. If no sidelink transmission is performed in the slot previous to the time-frequency resource 1, the length range of the CPE #1 is the length range 2.

Optionally, whether sidelink transmission is performed in the previous slot may be determined based on scheduling information of the network device 110 and/or reservation information of another terminal device and/or a transmission requirement of the terminal device 100. The scheduling information of the network device 110 may be carried in DCI, and the reservation information of the another terminal device may be carried in SCI.

Optionally, if it is sensed or learned that the time-frequency resource 2 is located in a same slot as the time-frequency resource 1, the length range of the CPE #1 is determined based on the length range of the CPE #2, or is determined based on a preconfiguration. The length range of the CPE #2 is indicated by the terminal device 200, or is determined based on one of the foregoing several manners.

Optionally, the preconfiguration may be preconfiguring to the length range 1 or the length range 2.

Optionally, the determining based on the length range of the CPE #2 may mean that the length ranges of the CPE #1 and the CPE #2 are the same.

Optionally, the sidelink information 2 has a higher or same or lower priority than the sidelink information 1; or the sidelink information 2 has a longer CPE length or an earlier CPE start position than the sidelink information 1; or the sidelink information 2 has a shorter CPE length or a later CPE start position than the sidelink information 1; or the CPE length range, determined based on one of the foregoing manners, of the CPE #1 is the same as the length range of the CPE #2; or the CPE length range, determined based on one of the foregoing manners, of the CPE #1 is the length range 1, and the length range of the CPE #2 is the length range 2; or the CPE length range, determined based on one of the foregoing manners, of the CPE #1 is the length range 2, and the length range of the CPE #2 is the length range 1; or the time-frequency resource 2 has an earlier or later resource reservation time than the time-frequency resource 1.

Optionally, when a plurality of sidelink transmissions and/or time-frequency resources corresponding to the sidelink transmissions are on a same time domain resource, the sidelink information 2 has a highest or lowest priority, or has a longest CPE length or an earliest CPE start position, or has a shortest CPE length or a latest CPE start position, or has an earliest or latest resource reservation time. Alternatively, the length range of the CPE is the length range 1, and a CPE length range of other sidelink information is also the length range 1; or the length range of the CPE is the length range 2, and a CPE length range of other sidelink information is also the length range 2; or the length range of the CPE is the length range 1, and a CPE length range of other sidelink information is the length range 1 or 2; or the length range of the CPE is the length range 2, and a CPE length range of other sidelink information is the length range 1 or 2.

Optionally, the length range of the CPE #1 may be determined based on one of the foregoing manners. It may be understood that, if it is not sensed or learned that a resource reserved by another terminal apparatus to transmit sidelink information is located in a same slot as the time-frequency resource 1, the length range of the CPE #1 is determined based on one of the foregoing manners, for example, determined depending on whether the time-frequency resource 1 is a resource on which a COT is initiated for transmission or a resource within a COT, or determined based on the interval between the end symbol of the sidelink resource in the previous slot and the start symbol of the sidelink resource in the current slot, or determined based on implementation of the terminal device 100.

The sensing means sensing or receiving sidelink control information sent by another terminal device. In addition, the learning means learning of information based on a preconfiguration and/or indication information, for example, learning of time-frequency information used for S-SSB transmission.

Optionally, determining a CPE based on a priority may mean that there is a correspondence between a length or a start position of the CPE and a layer 1 priority or a CAPC of corresponding sidelink information. The correspondence may alternatively be referred to as a mapping relationship or an association relationship. Optionally, the correspondence is determined based on a preconfiguration or a predefinition. For different SCSs, the correspondence may be the same or different. To be specific, for different SCSs, the correspondence may be preconfigured or predefined uniformly, or may be preconfigured or predefined separately. This is not limited.

Specifically, for LBT at a granularity of 9 µs, a length of one symbol for a 15/30/60 kHz SCS is approximately 72 µs, 36 µs, or 18 µs, and a length of two symbols for the 30/60 kHz SCS is approximately 72 µs or 36 µs. If the length or the start position of the CPE is determined based on the priority, the CPE length ranges are insufficient to distinguish eight different layer 1 priorities. Therefore, a correspondence between a length or a start position of a CPE and a priority of corresponding sidelink information is needed. Optionally, the length range of the CPE is the length range 2.

For example, for the 15/30 kHz SCS, the L1 priority is in one-to-one mapping with the length or the start position of the CPE. For the 60 kHz SCS, the channel access priority class (channel access priority class, CAPC) is in one-to-one mapping with the length or the start position of the CPE (a value range of the CAPC is 1 to 4), or two consecutive layer 1 priorities are mapped to one length or start position of the CPE.

Optionally, for the 15/30/60 kHz SCS, the layer 1 priority is in one-to-one mapping with the length or the start position of the CPE.

Optionally, for the 15/30/60 kHz SCS, the CAPC is in one-to-one mapping with the length or the start position of the CPE.

Optionally, for the 15/30/60 kHz SCS, two consecutive layer 1 priorities are in one-to-one mapping with the length or the start position of the CPE.

Optionally, CPE lengths or start positions corresponding to different priorities may be the same or different. Optionally, priorities corresponding to different CPE lengths or start positions may be the same or different.

Optionally, sidelink information with a higher priority has a longer CPE or an earlier CPE start position. Optionally, there is a correspondence between a priority and a priority value, and a higher priority indicates a smaller priority value.

Optionally, the one-to-one mapping may alternatively be one-to-one association or one-to-one correspondence. Optionally, the mapping between the priority and the length or the start position of the CPE may alternatively be a mapping between the priority and an identifier of the CPE. For the identifier of the CPE, refer to the foregoing descriptions. Details are not described herein again. Optionally, if the time-frequency resource 1 is a resource within a COT, the length or the start position of the CPE #1 is determined based on a preconfiguration, or an indication of a terminal device that initiates the COT.

Optionally, the CPE #1 is determined based on the type of the frequency domain resource of the time domain resource 1. If the type of the frequency domain resource corresponding to the sidelink information 1 is occupying a full RB set, the length or the start position of the CPE #1 may be determined based on the priority, or may be determined based on a preconfiguration, or may be randomly determined from one or more preconfigured candidate values. When the type of the frequency domain resource of the time-frequency resource 1 is occupying a partial RB set, if the time-frequency resource 1 does not experience frequency division multiplexing with a resource used by another terminal device to transmit sidelink information, or if the time-frequency resource 1 overlaps a resource used by another terminal device to transmit sidelink information, the length or the start position of the CPE #1 is determined based on a preconfiguration, or is determined based on the priority of the sidelink information 1. Optionally, a preconfigured length of the CPE #1 is 0. Optionally, when the type of the frequency domain resource of the time-frequency resource 1 is occupying a partial RB set, if the time-frequency resource 1 experiences frequency division multiplexing with a resource used by another terminal device to transmit sidelink information, the length or the start position of the CPE #1 is determined based on a (pre)configuration, or is determined based on the length or the start position of the CPE #2.

Optionally, for a manner of determining the length or the start position of the CPE based on a priority of sidelink transmission, refer to the foregoing descriptions. Details are not described herein again.

Optionally, the frequency division multiplexing means occupying different frequency domain resources in an RB set.

Optionally, the resource used by the another terminal device to transmit the sidelink information may be used to transmit a PSSCH/PSCCH or an S-SSB.

Optionally, a manner for learning of another resource for transmitting sidelink information and other information may be determining based on one or more of resource sensing, received sidelink control information, a (pre)configuration, or other indication information.

Optionally, the length, determined based on the priority or randomly, of the CPE #1 is greater than 0. Optionally, that the length of the CPE #1 is 0, that there is no CPE #1, and that the start position of the CPE #1 is a start boundary of SL transmission mean the same.

In a possible implementation, when the transmission type of the sidelink information 1 or the sidelink information 2 is initial transmission, FDM and a high-priority CPE being long need to be ensured. In this case, the length or the start position of the CPE #1 is determined in one of the following manners:

### Manner A:

(1) If no other sidelink information is transmitted in a same RB set on a time domain resource on which the time-frequency resource 1 is located, the length or the start position of the CPE #1 is determined based on the priority.
(2) If the time-frequency resource 1 does not overlap a resource corresponding to transmission of other sidelink information, but experiences, in an RB set, frequency division multiplexing with the resource (for example, the time-frequency resource 2) corresponding to the transmission of the other sidelink information, the length or the start position of the CPE #1 is determined based on a (pre)configuration, or is determined based on the CPE #2.
(3) If the time-frequency resource 1 overlaps the resource corresponding to the transmission of the other sidelink information, the length or the start position of the CPE #1 is determined based on the priority.

Optionally, the determining based on the CPE #2 may be that the length or the start position of the CPE #1 is equal to that of the CPE #2. Optionally, the CPE #2 has a longer or shorter length than the CPE #1, or the CPE #2 has an earlier or later start position than the CPE #1, or the time-frequency resource 2 has earlier or later resource reservation than the time-frequency resource 1, or the sidelink information 2 has a higher, equal, or lower priority than the sidelink information 1. Optionally, when a plurality of sidelink transmissions and/or time-frequency resources corresponding to the sidelink transmissions are on a same time domain resource, the CPE #2 has a longest or shortest length, or the CPE #2 has an earliest or latest start position, or the time-frequency resource 2 has earliest or latest resource, or the sidelink information 2 has a highest or lowest priority.

### Manner B:

1. When the type of the frequency domain resource corresponding to the sidelink information 1 is occupying a full RB set, the length or the start position of the CPE #1 may be determined based on the priority, or may be determined based on a preconfiguration, or may be randomly determined from one or more preconfigured candidate values.
2. When the type of the frequency domain resource of the time-frequency resource 1 is occupying a partial RB set, if the time-frequency resource 1 does not overlap a resource used by another terminal device to transmit sidelink information, the length or the start position of the CPE #1 is determined based on a preconfiguration. Optionally, a preconfigured length of the CPE #1 is 0.
3. When the type of the frequency domain resource of the time-frequency resource 1 is occupying a partial RB set, if the time-frequency resource 1 overlaps a resource that is used by another terminal device to transmit sidelink information and that occupies a full RB set, the length or the start position of the CPE #1 may be determined based on the priority, or may be randomly determined from one or more preconfigured candidate values.
4. When the type of the frequency domain resource of the time-frequency resource 1 is occupying a partial RB set, if the time-frequency resource 1 overlaps a resource that is used by another terminal device to transmit sidelink information and that occupies a partial RB set, the length or the start position of the CPE #1 may be determined based on the priority, or may be determined based on a preconfiguration, or may be randomly determined from one or more preconfigured candidate values.

Optionally, the length, determined based on the priority or randomly, of the CPE #1 is greater than 0.

Optionally, that the length of the CPE #1 is 0, that there is no CPE #1, and that the start position of the CPE #1 is a start boundary of SL transmission mean the same.

The following descriptions are applicable to the entire method 900.

Optionally, a CPE needs to be determined with reference to a length range.

Optionally, when the terminal device 100 determines and/or indicates the length or the start position of the CPE #1, or the terminal device 100 determines the length or the start position of the CPE #2, or the terminal device 200 determines and/or indicates the length or the start position of the CPE #2, or the terminal device 200 determines the length or the start position of the CPE #1, one of the following possible manners may be used for determining or indication:
a length or a start position of a CPE;
an identifier of a CPE;
a length range of a CPE and an identifier of the CPE;
a length range of a CPE and a priority of sidelink information; or
a length range of a CPE plus randomly determining from one or more preconfigured candidate values.

For explanations of the identifier of the CPE, refer to the foregoing descriptions. Details are not described herein again.

Optionally, the length or the start position of the CPE is an absolute CPE length or start position. It may be understood as that the length or the start position of the CPE is unrelated to the CPE length range. Optionally, the length or the start position of the CPE is determined based on a priority of sidelink information, or is determined based on a preconfiguration, or is randomly determined from one or more preconfigured candidate values. Optionally, for the determining based on the priority of the sidelink information, there is a correspondence between the priority and the length or the start position of the CPE. For details, refer to the foregoing descriptions.

Optionally, for the identifier of the CPE, a correspondence between the identifier and a CPE length or start position is absolute, or each identifier corresponds to a determined CPE length or start position. It may be understood as that the identifier is unrelated to the CPE length range. Optionally, the identifier of the CPE is determined based on a priority of sidelink information, or is determined based on a preconfiguration, or is randomly determined from one or more preconfigured candidate values. Optionally, for the determining based on the priority of the sidelink information, there is a correspondence between the priority and the identifier of the CPE. For details, refer to the foregoing descriptions.

Optionally, during resource reservation, the terminal device 200 indicates an absolute length/start position of the CPE #2 directly or by using a CPE identifier. To be specific, regardless of whether the length of the CPE #2 is determined based on the length range 1 or the length range 1, the CPE has a same absolute length/start position or identifier.

Optionally, a correspondence between the identifier and the absolute CPE length/start position is preconfigured.

Optionally, for the length range of the CPE and the identifier of the CPE, based on the length range of the CPE, a CPE length or start position that is within the length range and that corresponds to a priority of sidelink information is determined. For the CPE length range 1 and length range 2, a correspondence between the identifier and the CPE length or start position may be different. The identifier of the CPE may be indicated in sidelink control information, or may be preconfigured.

In an example, the terminal device 100 receives the length range, indicated by the terminal device 200, of the CPE #2. Specifically, the terminal device 100 determines the length or the start position of the CPE #1 based on the length range of the CPE #2. For example, the terminal device 200 indicates that the terminal device 200 determines that the length range of the CPE #2 is the length range 1. The terminal device 100 determines the length or the start position of the CPE #1 based on a correspondence between a length or a start position of the CPE #2 in one symbol and a priority or a CPE identifier, and the priority of the sidelink information 2 or the identifier of the CPE #2. For another example, the terminal device 200 indicates that the terminal device 200 determines that the length range of the CPE #2 is the length range 2, and an SCS is 30 kHz. The terminal device 100 determines the length or the start position of the CPE #1 based on a correspondence between a length or a start position of the CPE #2 in two symbols and a priority or a CPE identifier, and the priority of the sidelink information 2 or the identifier of the CPE #2. Specifically, during resource reservation, the terminal device 200 may indicate the length range of the CPE #2 by using SCI.

Optionally, for the length range of the CPE and the priority of the sidelink information, based on the length range of the CPE, a CPE length or start position that is within the length range and that corresponds to the priority of sidelink information is determined. Optionally, for the CPE length range 1 and length range 2, the correspondence between the priority and the CPE length or start position may be different.

Optionally, for the length range of the CPE plus randomly determining from one or more preconfigured candidate values, based on the length range of the CPE, the length or the start position of the CPE is randomly determined from the one or more preconfigured candidate values within the length range. Optionally, for the CPE length range 1 and length range 2, candidate values of the CPE length or start position may be different.

Optionally, the terminal device 200 further indicates the identifier (for example, an index, where when the length of the CPE is determined within the length range 1 and the length range 2, actual CPE lengths or start positions corresponding to a same CPE identifier may be different) of the CPE #2 transmitted on the time-frequency resource 2, and/or the priority of the sidelink information 2 (if the solution of determining the CPE based on the priority is used, the information may be used to determine the length or the start position of the CPE #2, where when the length of the CPE #2 is determined within the length range 1 and the length range 2, actual CPE lengths or start positions corresponding to a same priority may be different).

Correspondingly, the terminal device 100 aligns the length of the CPE #1 based on the length range of the CPE #2, for example, including:
Manner #1: If the length of the CPE #2 is determined within the length range 1 or 2 based on the indicated identifier, the terminal device 100 determines the length or the start position of the CPE #1 and/or the length or the start position of the CPE #2 based on the length range of the CPE #2 and the identifier of the CPE #2.
Manner #2: If the length of the CPE #2 is determined within the length range 1 or 2 based on the priority, the terminal device 100 determines the length or the start position of the CPE #1 and/or the length or the start position of the CPE #2 based on the length range and the priority of the CPE #2.
Manner #3: If the length of the CPE #2 is randomly determined from a candidate value within the length range 1 or 2, the terminal device 100 determines the length or the start position of the CPE #1 and/or the length or the start position of the CPE #2 based on the length range of the CPE #2.

Optionally, for the manners #1 to #3, the terminal device 100 performs alignment based on an indication of the terminal device 200, and when all CPE lengths are determined based on the length range 1 during transmission of sidelink information in a same slot, the terminal device 100 performs CPE length alignment based on the length range 1 according to a first principle. Optionally, the terminal device 100 performs alignment based on an indication of the terminal device 200, and when all the CPE lengths are determined based on the length range 2 during transmission of sidelink information in the same slot, the terminal device 100 performs CPE length alignment based on the length range 2 according to the first principle. Optionally, the terminal device 100 performs alignment based on an indication of the terminal device 200, and when there are a CPE length determined based on the length range 1 and a CPE length determined based on the length range 2 during transmission of sidelink information in the same slot, the terminal device 100 performs CPE length alignment based on the length range 1 or the length range 2 according to the first principle. The first principle is one of determining based on a CPE corresponding to other sidelink information in the same slot, or a preconfiguration. Optionally, for details of determining based on the CPE corresponding to the other sidelink information in the same slot, refer to the foregoing descriptions of determining the length or the start position of the CPE #1 based on the CPE #2. Details are not described herein again.

Optionally, the preconfiguration may include preconfiguring one of a length, a start position, an identifier, or an index of a CPE.

Optionally, a type of the length range 1 or the length range 2 may be directly indicated, or may be determined according to the foregoing method, or a quantity of symbols of the length range is preconfigured to 1 or 2.

Optionally, the sidelink information 1 is an S-SSB. When the time-frequency resource 1 does not belong to an RP, a (pre)configured CPE length is used for the S-SSB, that is, the length or the start position of the CPE #1 is (pre)configured. Optionally, when the time-frequency resource 1 does not belong to an RP, and is a resource within a COT, the length or the start position of the CPE #1 is (pre)configured or is indicated by a terminal device that initiates the COT. When the time-frequency resource 1 does not belong to an RP, and is a resource on which a COT is initiated for transmission rather than a resource within a COT, the length or the start position of the CPE #1 is (pre)configured. In this way, it can be ensured that when different terminal devices transmit S-SSBs on a common resource, CPEs are aligned, and mutual LBT blocking does not occur. In addition, COT continuity can be ensured, and a sufficient LBT duration can be left for channel access.

Optionally, when the time-frequency resource 1 belongs to an RP, the length range of the CPE #1 and/or the length or the start position of the CPE are/is determined according to the foregoing method for determining the length or the start position of the CPE. For details, refer to the foregoing descriptions. Optionally, when the time-frequency resource 1 belongs to an RP and is a resource within a COT, the length or the start position of the CPE #1 is determined based on a (pre)configuration, or an indication of a terminal device that initiates the COT.

Optionally, when the time-frequency resource 1 belongs to an RP, and is a resource on which a COT is initiated for transmission rather than a resource within a COT, the length or the start position of the CPE #1 is determined according to the foregoing method for determining the length or the start position of the CPE. In this way, it can be ensured that a CPE start position of sidelink data is aligned with the CPE start position of the S-SSB in FDM, thereby avoiding mutual blocking between transmission and ensuring FDM transmission.

Optionally, the time-frequency resource 1 and the time-frequency resource 2 are located in a same RB set. Optionally, the time-frequency resource 1 and the time-frequency resource 2 experience frequency division multiplexing in a same RB set.

Optionally, when the time-frequency resource #1 is located in a COT, regardless of whether the time-frequency resource #1 belongs to an RP or does not belong to an RP, in this application, determining of the CPE #1 based on a (pre)configuration, or determining of the CPE #1 based on an indication of a terminal device that initiates the COT is supported. In this way, COT continuity can be ensured, and a sufficient LBT duration can be left for channel access.

Optionally, the time-frequency resource 1 is an additional occasion (additional occasion).

Optionally, the additional occasion is an S-SSB transmission occasion located in an RP. It is assumed that when the terminal device 100 does not transmit the S-SSB on the additional occasion, the terminal device 100 is allowed to transmit sidelink data on the time-frequency resource used for S-SSB transmission.

Optionally, when the terminal device 100 selects a resource for sidelink data transmission, the resource may be the same as a time-frequency resource that is not used by the terminal device 100 to transmit an additional S-SSB.

Optionally, the S-SSB transmission occasion may alternatively be an S-SSB transmission slot. In this case, for a distributed sidelink communication system, it is difficult for the terminal device 100 to ensure whether another terminal device transmits an S-SSB on the additional occasion, that is, different terminal devices may perform different behavior on a same additional occasion.

In the following manners, a resource conflict and collision that occur when different terminal devices transmit a PSSCH/PSCCH and an S-SSB on the time-frequency resource 1 are avoided:
1. Optionally, the length or the start position of the CPE #1 is determined based on a (pre)configuration. Optionally, the length of the CPE #1 is longer than a CPE length of sidelink data of any priority, or the start position of the CPE #1 is earlier than a CPE start position of the sidelink data of the any priority. In this way, it can be ensured that a resource designed for S-SSB transmission can always be preferentially used for S-SSB transmission, and sidelink data transmission can access a channel only when there is no S-SSB transmission.
2. Optionally, the length or the start position of the CPE #1 is determined based on the priority. For a specific manner, refer to the foregoing descriptions. For example, optionally, a higher priority indicates a longer CPE length (or an earlier start position). In this way, it can be ensured that high-priority transmission can have preferential access, and low-priority transmission can be blocked. Optionally, a candidate value of the CPE length that is determined based on the priority, preconfigured, or randomly determined includes but is not limited to one or more of the following: a total length, the total length minus 1 µs, the total length minus 2 µs, the total length minus 3 µs, the total length minus 4 µs, the total length minus 5 µs, the total length minus 6 µs, the total length minus 7 µs, the total length minus 8 µs, the total length minus 9 µs, the total length minus 10 µs, the total length minus 11 µs, the total length minus 12 µs, the total length minus 13 µs, the total length minus 14 µs, the total length minus 15 µs, the total length minus 16 µs, the total length minus 25 µs, the total length minus 34 µs, the total length minus 43 µs, the total length minus 52 µs, the total length minus 61 µs, the total length minus 70 µs, or 0. Optionally, the total length is a length of one or two OFDM symbols.

Optionally, a CPE start position candidate value corresponding to the CPE length candidate value needs to be determined based on a corresponding CPE length before a start boundary of the first symbol used to transmit sidelink information. Optionally, the CPE candidate value is also applicable to the correspondence between the CPE identifier or priority and the CPE length or start position. Optionally, the CPE candidate value is applicable to the method 900.

Optionally, the total length is determined based on the length range of the CPE.

Optionally, the total length is equal to a maximum value of the CPE length range.

In this way, in this application, a resource conflict and collision that occur when different terminal devices transmit a PSSCH/PSCCH and an S-SSB on the time-frequency resource 1 can be avoided, and it can be ensured that only one type of transmission can have successful access.

S930. Send the CPE #1 before the time-frequency resource 1, and send the sidelink information 1 on the time-frequency resource 1.

Correspondingly, the terminal device 200 may receive the sidelink information 1 that is sent by the terminal device 100 on the time-frequency resource 1.

It should be noted that, if the length of the CPE #1 is 0, it may be considered that the CPE #1 whose length is 0 is sent, or it is considered that the CPE #1 is not sent.

According to the foregoing technical solution, in this application, determining of different scenarios to which different maximum CPE lengths/earliest CPE start positions are applicable is supported, and a method for determining CPEs in different scenarios is designed, to ensure that FDM and high-priority transmission can be performed smoothly, and ensure communication performance.

FIG. 10 is a diagram of a communication method 1000 according to an embodiment of this application. The method 1000 may be performed by a terminal device 100, or may be performed by a module and/or a component (for example, a chip or an integrated circuit) that is installed in the terminal device 100 and that has a corresponding function. This is not limited. The terminal device 100 may be a terminal device, a terminal apparatus, a chip or a module of a terminal device, or the like. This is not limited. As shown in FIG. 10, the method 1000 includes the following steps. S1010. Determine a resource 5 (for example, a first time-frequency resource) and a resource 6 (for example, a second time-frequency resource) from an RP, where the resource 5 is used for sidelink data transmission, and the resource 6 is used for S-SSB transmission.

Optionally, the sidelink data is a PSSCH and/or a PSCCH.

Optionally, the resource 6 is determined based on a (pre)configuration or according to a rule. If the S-SSB needs to be transmitted on a plurality of RB sets, that is, there are a plurality of resources 6, this method is applicable to each resource 6. It may be understood that, when a frequency domain resource used to transmit the S-SSB includes a plurality of RB sets, the foregoing technical solution is applicable to each of the plurality of RB sets.

Optionally, the S-SSB is transmitted on inconsecutive or consecutive frequency domain resources. The transmission on inconsecutive frequency domain resources means that one S-SSB is transmitted on inconsecutive frequency domain resources, or is referred to as interlace (interlace) transmission. The transmission on consecutive frequency domain resources means that one S-SSB is transmitted on consecutive frequency domain resources, and the S-SSB may be repeatedly sent for one or more times in frequency domain. Optionally, the transmission of the S-SSB on inconsecutive or consecutive frequency domain resources is performed in an RB set. Optionally, the frequency domain resource used to transmit the S-SSB includes one or more interlaces in an RB set.

Considering that a sidelink communication system is a distributed system, assuming that there is always another terminal device transmitting an S-SSB on an additional occasion (additional occasion), the terminal device 100 needs to exclude, from the RP during resource selection for sidelink data, a time-frequency resource used to transmit the additional S-SSB. Optionally, the additional occasion is an S-SSB transmission occasion located in the RP. Optionally, the S-SSB transmission occasion may alternatively be an S-SSB transmission slot.

Optionally, the resource 5 is different from the resource 6. In this way, it can be ensured that a resource used for sidelink data transmission does not conflict with a resource used for S-SSB transmission, and different terminal devices are allowed to transmit sidelink data and an S-SSB on a same time domain resource by using different frequency domain resources. Optionally, the resource determined by the terminal device 100 for sidelink data transmission, that is, the resource 5, is different from the resource 6. Optionally, the resource 6 is a time-frequency resource used for S-SSB transmission. Optionally, the resource 6 is a time-frequency resource used by any terminal device to perform S-SSB transmission.

Optionally, the transmission may be sending and/or receiving. Optionally, that the resource 5 is different from the resource 6 may be as follows: A PHY layer of the terminal device 100 excludes the resource 6 when determining a candidate resource set; or a MAC layer of the terminal device 100 selects a resource different from the resource 6 when selecting the resource 5 from a candidate resource set reported by the PHY layer. Optionally, excluding the resource 6 may be excluding a candidate resource overlapping the resource 6.

Optionally, on time domain resources on which the resource 5 and the resource 6 are located, all frequency domain resources in an RB set in which the resource 6 is located are different. In this way, it can be ensured that a resource used for sidelink data transmission and a resource used for S-SSB transmission do not overlap in an RB set, to avoid a failure to complete initial synchronization, and/or avoid mutual LBT blocking caused by different CPE lengths of the S-SSB and sidelink data transmission, and allow different terminal devices to transmit sidelink data and an S-SSB on a same time domain resource by using frequency domain resources of different RB sets. Optionally, the time domain resources on which the resource determined by the terminal device 100 for sidelink data transmission, that is, the resource 5, and the resource 6 are located are different. Optionally, the resource 6 is a time-frequency resource used by the terminal device 100 to send the S-SSB. Optionally, that the time domain resources on which the resource 5 and the resource 6 are located are different may be as follows: When determining a candidate resource set, the PHY layer of the terminal device 100 excludes the time domain resource on which the resource 6 is located; or when selecting the resource 5 from a candidate resource set reported by the PHY layer, the MAC layer of the terminal device 100 selects a resource different from the time domain resource on which the resource 6 is located. Optionally, excluding the time domain resource on which the resource 6 is located may be excluding a candidate resource overlapping the time domain resource on which the resource 6 is located. Optionally, excluding the time domain resource on which the resource 6 is located may be excluding all frequency domain resources in an RB set in which the resource 6 is located on the time domain resource on which the resource 6 is located.

Optionally, on the time domain resources on which the resource 5 and the resource 6 are located, all frequency domain resources in an RP or a BWP are different. In this way, it can be ensured that the terminal device 100 does not have a problem of sending the sidelink data and the S-SSB at the same time. Optionally, the time domain resources on which the resource determined by the terminal device 100 for sidelink data transmission, that is, the resource 5, and the resource 6 are located are different. Optionally, the resource 6 is a time-frequency resource used by the terminal device 100 to send the S-SSB. Optionally, that the time domain resources on which the resource 5 and the resource 6 are located are different may be as follows: When determining a candidate resource set, the PHY layer of the terminal device 100 excludes the time domain resource on which the resource 6 is located; or when selecting the resource 5 from a candidate resource set reported by the PHY layer, the MAC layer of the terminal device 100 selects a resource different from the time domain resource on which the resource 6 is located. Optionally, excluding the time domain resource on which the resource 6 is located may be excluding a candidate resource overlapping the time domain resource on which the resource 6 is located. Optionally, excluding the time domain resource on which the resource 6 is located may be excluding all frequency domain resources in the RP or the BWP on the time domain resource on which the resource 6 is located.

Optionally, on the time domain resources in which the resource 5 and the resource 6 are located, all frequency domain resources in an RP or a BWP are different. In this way, it can be ensured that the terminal device 100 does not have a problem of sending the sidelink data and receiving the S-SSB at the same time, or receiving the sidelink data and sending the S-SSB at the same time. Optionally, the time domain resources on which the resource determined by the terminal device 100 for sidelink data transmission, that is, the resource 5, and the resource 6 are located are different. Optionally, the resource 6 is a time-frequency resource used by the terminal device 100 to receive the S-SSB. Optionally, that the time domain resources on which the resource 5 and the resource 6 are located are different may be as follows: When determining a candidate resource set, the PHY layer of the terminal device 100 excludes the time domain resource on which the resource 6 is located; or when selecting the resource 5 from a candidate resource set reported by the PHY layer, the MAC layer of the terminal device 100 selects a resource different from the time domain resource on which the resource 6 is located. Optionally, excluding the time domain resource on which the resource 6 is located may be excluding a candidate resource overlapping the time domain resource on which the resource 6 is located. Optionally, excluding the time domain resource on which the resource 6 is located may be excluding all frequency domain resources in the RP or the BWP on the time domain resource on which the resource 6 is located.

Optionally, on the time domain resources in which the resource 5 and the resource 6 are located, all frequency domain resources in an RP or a BWP are different. In this way, it can be ensured that there is no problem of receiving or sending sidelink data and an S-SSB on a same time domain resource by a same terminal device or different terminal devices. Optionally, the time domain resources on which the resource determined by the terminal device 100 for sidelink data transmission, that is, the resource 5, and the resource 6 are located are different. Optionally, the resource 6 is a time-frequency resource used to transmit the S-SSB. Optionally, that the time domain resources on which the resource 5 and the resource 6 are located are different may be as follows: When determining a candidate resource set, the PHY layer of the terminal device 100 excludes the time domain resource on which the resource 6 is located; or when selecting the resource 5 from a candidate resource set reported by the PHY layer, the MAC layer of the terminal device 100 selects a resource different from the time domain resource on which the resource 6 is located. Optionally, excluding the time domain resource on which the resource 6 is located may be excluding a candidate resource overlapping the time domain resource on which the resource 6 is located. Optionally, excluding the time domain resource on which the resource 6 is located may be excluding all frequency domain resources in the RP or the BWP on the time domain resource on which the resource 6 is located.

Optionally, the method 1000 further includes:
S1010a. Determine, based on a priority of sidelink data transmission and a priority of an S-SSB or according to a predefined rule, to perform sidelink data transmission on the resource 5 or perform S-SSB transmission on the resource 6.

Specifically, the priority is an L1 priority or a physical layer priority. Optionally, the predefined rule is preferentially performing S-SSB transmission when a conflict occurs between sidelink data transmission and S-SSB transmission. This is because the resource 6 is designed for S-SSB transmission and the S-SSB is supposed to be preferentially transmitted. Optionally, the resource 5 and the resource 6 are located on a same time domain resource or overlap in time domain. Optionally, when the terminal device 100 is to send sidelink data on the resource 5, and is to send an S-SSB on the resource 6, the terminal device 100 performs transmission of one with a higher priority in the sidelink data and the S-SSB, or the terminal device 100 performs S-SSB transmission. Optionally, when the terminal device 100 is to receive sidelink data on the resource 5, and is to send an S-SSB on the resource 6, the terminal device 100 performs transmission of one with a higher priority in the sidelink data and the S-SSB, or the terminal device 100 performs S-SSB transmission. Optionally, when the terminal device 100 is to send sidelink data on the resource 5, and is to receive an S-SSB on the resource 6, the terminal device 100 performs transmission of one with a higher priority in the sidelink data and the S-SSB, or the terminal device 100 performs S-SSB transmission.

Optionally, there is a correspondence between a priority and a priority value, and a higher priority corresponds to a smaller priority value. Therefore, the transmission of one with a higher priority optionally may alternatively be transmission of one with a smaller priority value. Optionally, the transmission may be sending and/or receiving. Optionally, when the terminal device 100 is to receive sidelink data on the resource 5, and is to send an S-SSB on the resource 6, if the terminal device 100 determines, based on the priorities or the predefined rule, to perform S-SSB transmission, the terminal device 100 may send assistance information or NACK feedback information to a terminal device that sends the to-be-received sidelink data.

Optionally, the assistance information indicates that a resource conflict occurs on the resource 5 or the resource 6. Optionally, a type of the resource conflict is a time domain resource conflict. Optionally, after receiving the assistance information, the terminal device that sends the to-be-received sidelink data reselects, based on the assistance information, a resource for the sidelink transmission, where the reselected resource is different from the time domain resource on which the resource 5 or the resource 6 is located. Optionally, after receiving the NACK feedback information, the terminal device that sends the to-be-received sidelink data retransmits the sidelink data.

S1020. Perform sidelink data transmission on the resource 5, and/or perform S-SSB transmission on the resource 6.

Correspondingly, a terminal device 200 may receive sidelink data that is sent by the terminal device 100 on the resource 5, and/or receive an S-SSB that is sent by the terminal device 100 on the resource 6.

According to the foregoing technical solution, it is determined to perform sidelink data transmission on the resource 5 and perform S-SSB transmission on the resource 6, or it is determined to perform one of sidelink data transmission on the resource 5 and S-SSB transmission on the resource 6. It may be understood that when a conflict between the sidelink data and the S-SSB is avoided through resource selection or resource exclusion at the PHY layer or the MAC layer, the terminal device 100 respectively performs sidelink data transmission and S-SSB transmission on the resource 5 and the resource 6. When determining, based on the priorities or the predefined rule, to perform one of sidelink data transmission and S-SSB transmission, the terminal device 100 performs one of sidelink data transmission on the resource 5 and S-SSB transmission on the resource 6.

Optionally, the time domain resource may be any one of a slot, a symbol, or a mini-slot. The definition is applicable to the entire specification.

It is assumed that when the terminal device 100 does not transmit the S-SSB on the additional occasion, the terminal device 100 is allowed to transmit the sidelink data on the time-frequency resource used for S-SSB transmission. In other words, when the terminal device 100 selects a resource for sidelink data transmission, the resource may be the same as a time-frequency resource that is not used by the terminal device 100 to transmit an additional S-SSB. Optionally, the additional occasion is an S-SSB transmission occasion located in an RP. Optionally, the S-SSB transmission occasion may alternatively be an S-SSB transmission slot. In this case, for a distributed sidelink communication system, it is difficult for the terminal device 100 to ensure whether another terminal device transmits an S-SSB on the additional occasion, that is, different terminal devices may perform different behavior on a same additional occasion. Therefore, an additional occasion may be used to transmit sidelink data, and may also be used to transmit an S-SSB. A receiving terminal device cannot determine whether the sidelink data or the S-SSB is transmitted on the additional occasion. It is considered to perform blind detection in the following manners.

Optionally, the receiving terminal device determines, through S-PSS and/or S-SSS detection on the additional occasion, whether there are/is an S-PSS and/or an S-SSS on one or more of symbols 1, 2, 3, and 4. If there are/is an S-PSS and/or an S-SSS, it is determined that the S-SSB is sent on the resource; otherwise, receiving and processing are performed based on a PSSCH/PSCCH. Optionally, when it is determined that there is no S-PSS and/or S-SSS, it is possible that no transmission is performed on the additional occasion. Optionally, a start symbol index is 0, that is, the symbols 1, 2, 3, and 4 are respectively the second, third, fourth, and fifth symbols.

Optionally, the receiving terminal device determines, through PSSCH and/or PSCCH DMRS or PSBCH DMRS detection on the additional occasion, whether the PSSCH/PSCCH or the S-SSB is sent on the resource. If there is a PSBCH DMRS, it is determined that the S-SSB is sent on the resource; if there is a PSSCH and/or PSCCH DMRS, it is determined that the PSSCH and/or the PSCCH are/is sent on the resource; otherwise, it is considered that no transmission is performed on the additional occasion.

Optionally, the additional occasion may be a time domain resource or a time-frequency resource. This is not limited.

Optionally, the receiving terminal device may be the terminal device 100.

In this way, the receiving terminal device may determine whether the PSSCH/PSCCH or the S-SSB is transmitted on the additional occasion, to perform corresponding receiving and processing. According to the foregoing technical solution, in this application, a PSSCH/PSCCH resource selection/exclusion method is designed for an S-SSB occasion located in an RP, to avoid problems of concurrency and half-duplex of a same terminal device between an S-SSB and sidelink data. In addition, resource exclusion solutions are separately designed for scenarios in which FDM transmission is allowed for an S-SSB and a PSSCH/PSCCH of different terminal devices or not, to ensure that no conflict occurs between the PSSCH/PSCCH and the S-SSB, thereby ensuring communication performance.

The foregoing describes method embodiments in embodiments of this application, and the following describes corresponding apparatus embodiments.

To implement functions in the methods provided in embodiments of this application, both the terminal and the network device may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

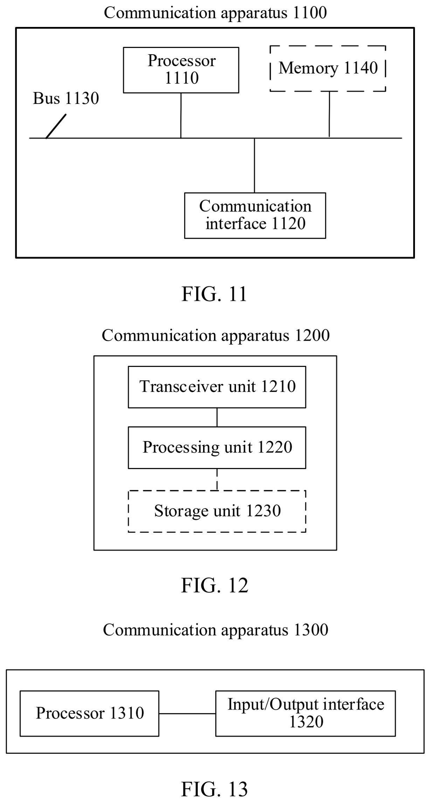

FIG. 11 is a block diagram of a communication apparatus 1100 according to an embodiment of this application. The communication apparatus 1100 includes a processor 1110 and a communication interface 1120. The processor 1110 and the communication interface 1120 may be connected to each other by using a bus 1130. The communication apparatus 1100 shown in FIG. 11 may be a terminal device, or may be a network device.

Optionally, the communication apparatus 1100 further includes a memory 1140.

The memory 1140 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1140 is used for related instructions and data.

The processor 1110 may be one or more central processing units (central processing unit, CPU). When the processor 1110 is one CPU, the CPU may be a single-core CPU, or may be a multi-core CPU.

When the communication apparatus 1100 is the terminal device 100, for example, the processor 1110 in the communication apparatus 1100 is configured to perform the following operations: reporting, to the network device, at least one of the identifier of the resource 1 and the identifier of the RP corresponding to the resource 1; and determining, at the time t1, that LBT on the resource 1 meets the consistent LBT failure.

The foregoing content is merely used as example descriptions. When the communication apparatus 1100 is the terminal device 100, the communication apparatus 1100 is responsible for performing the methods or steps related to the terminal device 100 in the foregoing method embodiments. When the communication apparatus 1100 is the network device, for example, the processor 1110 in the communication apparatus 1100 is configured to perform the following operation: receiving at least one, reported by the terminal device 100, of the identifier of the resource 1 and the identifier of the RP corresponding to the resource 1.

The foregoing content is merely used as example descriptions. When the communication apparatus 1100 is the network device, the communication apparatus 1100 is responsible for performing the methods or steps related to the network device in the foregoing method embodiments.

The foregoing descriptions are merely example descriptions. For specific content, refer to content shown in the foregoing method embodiments. In addition, for implementation of each operation in FIG. 11, refer to corresponding descriptions of the method embodiments shown in FIG. 4 to FIG. 10.

FIG. 12 is a block diagram of a communication apparatus 1200 according to an embodiment of this application. The communication apparatus 1200 may be the network device or the terminal device in the foregoing embodiments, or may be a chip or a module in the network device or the terminal device, and is configured to implement the methods in the foregoing embodiments. The communication apparatus 1200 includes a transceiver unit 1210 and a processing unit 1220. The following describes the transceiver unit 1210 and the processing unit 1220 by using examples.

The transceiver unit 1210 may include a sending unit and a receiving unit to implement a sending or receiving function in the foregoing method embodiments. The processing unit may be further included to implement a function other than the sending or receiving function.

When the communication apparatus 1200 is a terminal device, for example, the transceiver unit 1210 is configured to report, to a network device, at least one of an identifier of a resource 1 and an identifier of an RP corresponding to the resource 1. The processing unit 1220 is configured to determine, at a time t1, that LBT on the resource 1 meets a consistent LBT failure.

Optionally, the communication apparatus 1200 further includes a storage unit 1230, and the storage unit 1230 is configured to store a program or code used to perform the foregoing methods.

The foregoing content is merely used as example descriptions. When the communication apparatus 1200 is a terminal device, the communication apparatus 1200 is responsible for performing the methods or steps related to a terminal device in the foregoing method embodiments.

When the communication apparatus 1200 is a network device, for example, the transceiver unit 1210 is configured to receive at least one, reported by a terminal device, of an identifier of a resource 1 and an identifier of an RP corresponding to the resource 1.

Optionally, the communication apparatus 1200 may further include the processing unit 1220, and the processing unit 1220 is configured to perform content related to steps of processing, coordination, or the like of the network device.

Optionally, the communication apparatus 1200 further includes a storage unit 1230, and the storage unit 1230 is configured to store a program or code used to perform the foregoing methods.

The foregoing content is merely used as example descriptions. When the communication apparatus 1200 is a network device, the communication apparatus 1200 is responsible for performing the methods or steps related to a network device in the foregoing method embodiments.

In addition, for implementation of each operation in FIG. 12, refer to corresponding descriptions of the methods shown in the foregoing embodiments. Details are not described herein again.

The apparatuses shown in FIG. 11 and FIG. 12 are configured to implement the content described in FIG. 4 to FIG. 10. Therefore, for specific execution steps and methods of the apparatuses shown in FIG. 10 and FIG. 12, refer to the content described in the foregoing method embodiments.

It should be understood that the transceiver unit may include a sending unit and a receiving unit. The sending unit is configured to execute a sending action of the communication apparatus, and the receiving unit is configured to execute a receiving action of the communication apparatus. For ease of description, in this embodiment of this application, the sending unit and the receiving unit are combined into one transceiver unit. This is noted herein once for all, and is not repeated below. FIG. 13 is a diagram of a communication apparatus 1300 according to an embodiment of this application. The communication apparatus 1300 may be configured to implement functions of the network device or the terminal device in the foregoing methods. The communication apparatus 1300 may be a chip in the network device or the terminal device. The communication apparatus 1300 includes an input/output interface 1320 and a processor 1310. The input/output interface 1320 may be an input/output circuit. The processor 1310 may be a signal processor, a chip, or another integrated circuit that may implement the methods in this application. The input/output interface 1320 is configured to input or output a signal or data.

For example, when the communication apparatus 1300 is the terminal device, the input/output interface 1320 is configured to report, to the network device, at least one of the identifier of the resource 1 and the identifier of the RP corresponding to the resource 1. The processor 1310 is configured to determine, at the first time, that listen before talk LBT on the first resource meets the consistent LBT failure. The processor 1310 is further configured to perform a part of or all steps of any method provided in this application.

For example, when the communication apparatus 1300 is the network device, the input/output interface 1320 is configured to receive at least one, reported by the terminal device 100, of the identifier of the resource 1 and the identifier of the RP corresponding to the resource 1. The processor 1310 is configured to perform a part of or all steps of any method provided in this application.

In a possible implementation, the processor 1310 executes instructions stored in a memory, to implement the functions implemented by the network device or the terminal device.

Optionally, the communication apparatus 1300 further includes the memory.

Optionally, the processor and the memory are integrated together.

Optionally, the memory is located outside the communication apparatus 1300.

In a possible implementation, the processor 1310 may be a logic circuit, and the processor 1310 inputs/outputs a message or signaling via the input/output interface 1320. The logic circuit may be a signal processor, a chip, or another integrated circuit that may implement the methods in embodiments of this application.

The foregoing descriptions of the apparatus in FIG. 13 are merely example descriptions. The apparatus can be configured to perform the methods in the foregoing embodiments. For specific content, refer to the descriptions in the foregoing method embodiments. Details are not described herein again.

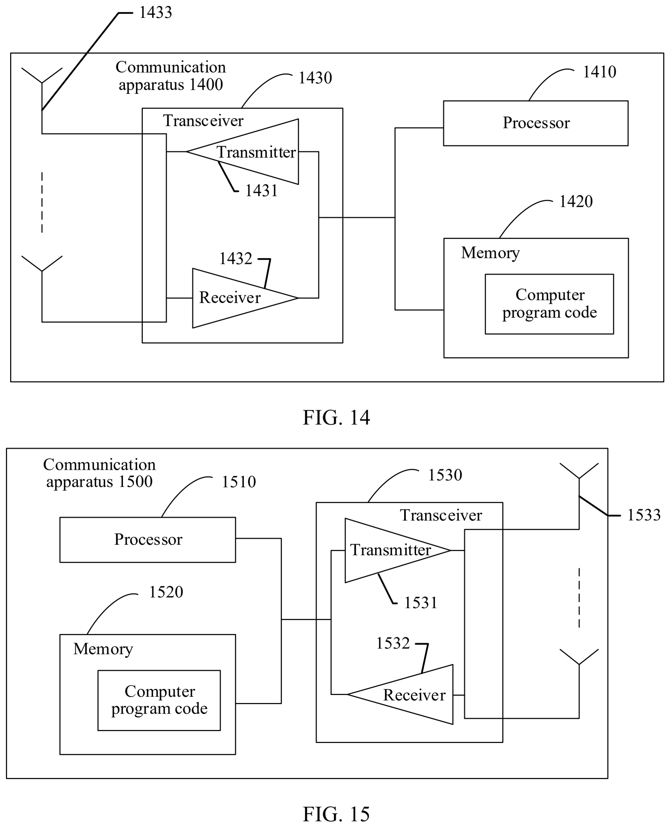

FIG. 14 is a block diagram of a communication apparatus 1400 according to an embodiment of this application. The communication apparatus 1400 may be a network device or a chip. The communication apparatus 1400 may be configured to perform the operations performed by a network device in the foregoing method embodiments.

When the communication apparatus 1400 is a network device, for example, a base station, FIG. 14 is a simplified diagram of a structure of the base station. The base station includes a module 1410, a module 1420, and a module 1430. The module 1410 is mainly configured to perform baseband processing, control the base station, and the like. The module 1410 is usually a control center of the base station, may be usually referred to as a processor, and is configured to control the base station to perform a processing operation on a network device side in the foregoing method embodiments. The module 1420 is mainly configured to store computer program code and data. The module 1430 is mainly configured to: receive or send a radio frequency signal, and perform conversion between the radio frequency signal and a baseband signal. The module 1430 may be usually referred to as a transceiver module, a transceiver machine, a transceiver circuit, a transceiver, or the like. The transceiver module of the module 1430 may alternatively be referred to as a transceiver machine, a transceiver, or the like, and includes an antenna 1433 and a radio frequency circuit (not shown in the figure). The radio frequency circuit is mainly configured to perform radio frequency processing. Optionally, in the module 1430, a component configured to implement a receiving function may be considered as a receiver, and a component configured to implement a sending function may be considered as a transmitter. In other words, the module 1430 includes a receiver 1432 and a transmitter 1431. The receiver may alternatively be referred to as a receiving module, a receiver machine, a receiver circuit, or the like. The transmitter may alternatively be referred to as a transmitting module, a transmitter machine, a transmitter circuit, or the like.

The module 1410 and the module 1420 may include one or more boards, and each board may include one or more processors and one or more memories. The processor is configured to read and execute a program in the memory, to implement a baseband processing function and control the base station. If there are a plurality of boards, the boards may be interconnected to enhance a processing capability. In an optional implementation, a plurality of boards may share one or more processors, or a plurality of boards share one or more memories, or a plurality of boards simultaneously use one or more processors.

For example, in an implementation, the transceiver module of the module 1430 is configured to perform a receiving/sending-related process performed by the network device in the embodiment FIG. 8. The processor of the module 1410 is configured to perform a processing-related process performed by the network device in the embodiment shown in FIG. 8.

In another implementation, the processor of the module 1410 is configured to perform a processing-related process performed by a communication device in the embodiment shown in FIG. 8.

In another implementation, the transceiver module of the module 1430 is configured to perform a receiving/sending-related process performed by a communication device in the embodiment shown in FIG. 8.

It should be understood that FIG. 14 is merely an example rather than a limitation, and the foregoing network device including the processor, the memory, and the transceiver may not depend on the structures shown in FIG. 11 to FIG. 13.

When the communication apparatus 1400 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

FIG. 15 is a block diagram of a communication apparatus 1500 according to an embodiment of this application. The communication apparatus 1500 may be a terminal device, a processor of the terminal device, or a chip. The communication apparatus 1500 may be configured to perform the operations performed by a terminal device or a communication device in the foregoing method embodiments.

When the communication apparatus 1500 is a terminal device, FIG. 15 is a simplified diagram of a structure of the terminal device. As shown in FIG. 15, the terminal device includes a processor, a memory, and a transceiver. The memory may store computer program code. The transceiver includes a transmitter 1531, a receiver 1532, a radio frequency circuit (not shown in the figure), an antenna 1533, and an input/output apparatus (not shown in the figure).

The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send radio frequency signals in an electromagnetic wave form. The input/output apparatus, for example, a touchscreen, a display screen, or a keyboard, is mainly configured to receive data inputted by a user and output data to the user. It should be noted that some types of terminal devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends a radio frequency signal to the outside by using the antenna in the electromagnetic wave form. When data is sent to the terminal device, the radio frequency circuit receives a radio frequency signal by using the antenna, converts the radio frequency signal into a baseband signal, and outputs the baseband signal to the processor. The processor converts the baseband signal into data, and processes the data. For ease of description, FIG. 15 merely shows one memory, one processor, and one transceiver. In an actual terminal device product, there may be one or more processors and one or more memories. The memory may alternatively be referred to as a storage medium, a storage device, or the like. The memory may be disposed independent of the processor, or may be integrated with the processor. This is not limited in this embodiment of this application.

In this embodiment of this application, the antenna and the radio frequency circuit that have a receiving/sending function may be considered as a transceiver module of the terminal device, and the processor that has a processing function may be considered as a processing module of the terminal device.

As shown in FIG. 15, the terminal device includes a processor 1514, a memory 1520, and a transceiver 1530. The processor 1514 may alternatively be referred to as a processing unit, a processing board, a processing module, a processing apparatus, or the like. The transceiver 1530 may alternatively be referred to as a transceiver unit, a transceiver machine, a transceiver apparatus, or the like.

Optionally, a component in the transceiver 1530 and configured to implement a receiving function may be considered as a receiving module, and a component in the transceiver 1530 and configured to implement a sending function may be considered as a sending module. In other words, the transceiver 1530 includes a receiver and a transmitter. The transceiver sometimes may alternatively be referred to as a transceiver machine, a transceiver module, a transceiver circuit, or the like. The receiver sometimes may alternatively be referred to as a receiver machine, a receiving module, a receiver circuit, or the like. The transmitter sometimes may alternatively be referred to as a transmitter machine, a transmitting module, a transmitter circuit, or the like.

For example, in an implementation, the processor 1514 is configured to perform a processing action on a terminal device side in the embodiments shown in FIG. 4 to FIG. 10, and the transceiver 1530 is configured to perform a receiving/sending action on the terminal device side in FIG. 4 to FIG. 10.

For example, in an implementation, the processor 1514 is configured to perform a processing action on a terminal device side in the embodiments shown in FIG. 4 to FIG. 10, and the transceiver 1530 is configured to perform a receiving/sending action on the terminal device side in FIG. 4 to FIG. 10.

It should be understood that FIG. 15 is merely an example rather than a limitation. The foregoing terminal device including the transceiver module and the processing module may not depend on the structures shown in FIG. 11 and FIG. 13.

When the communication apparatus 1500 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip, including a processor, configured to invoke, from a memory, instructions stored in the memory and run the instructions, to enable a communication device on which the chip is installed to perform the methods in the foregoing examples.

This application further provides another chip, including an input interface, an output interface, and a processor. The input interface, the output interface, and the processor are connected by using an internal connection path. The processor is configured to execute code in a memory. When the code is executed, the processor is configured to perform the methods in the foregoing examples. Optionally, the chip further includes the memory, and the memory is configured to store a computer program or the code.

This application further provides a processor, configured to couple to a memory, and configured to perform a method and a function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiments is implemented.

In descriptions of embodiments of this application, unless otherwise specified, "a plurality of" means two or more. The expression "at least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference. In addition, in embodiments of this application, a phrase such as "example" or "for example" is used to represent giving an example, an illustration, or a description.

Any embodiment or design scheme described as "example" or "for example" in embodiments of this application should not be explained as being more preferred or having more advantages than another embodiment or design scheme. Exactly, use of the phrase such as "example" or "for example" is intended to present a related concept in a specific manner for ease of understanding. In descriptions of embodiments of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

In embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that, with reference to units and algorithm steps in the examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part of or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in a form of a software functional unit and sold or used as an independent product, the functions may be stored in a computer-readable storage medium. Based on such an understanding, the technical solutions of embodiments of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk drive, a ROM, a RAM, a magnetic disk, or an optical disc.

The foregoing descriptions are merely specific implementations of embodiments of this application, but are not intended to limit the protection scope of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, comprising:
determining, at a first time, that listen before talk LBT on a first resource meets a consistent LBT failure;
determining a first duration; and
determining a first resource set from a resource selection window based on the first time and the first duration, wherein a resource in the first resource set is used for sidelink communication.

2. The method according to claim 1, wherein
a slot in which resource selection is triggered and that corresponds to the resource selection window is in the first duration starting from the first time, and the first resource set does not comprise a resource that is in the resource selection window and that corresponds to the first resource; or
the first resource set does not comprise a resource that is in the resource selection window, that corresponds to the first resource, and that is in the first duration starting from the first time.

3. The method according to claim 1 or 2, wherein the method further comprises:
determining, based on at least one of the first duration and a first condition, to cancel the consistent LBT failure, wherein
the first condition comprises:
in the first duration starting from the first time, an accumulated quantity of times that a first channel busy ratio of the first resource is less than a first threshold is greater than a second threshold; and/or
in the first duration starting from the first time, a second channel busy ratio of the first resource is less than a third threshold.

4. The method according to claim 3, wherein the accumulated quantity of times that the first channel busy ratio of the first resource is less than the first threshold is greater than the second threshold, and the method further comprises:
measuring the first channel busy ratio of the first resource once every second duration in the first duration starting from the first time.

5. The method according to any one of claims 1 to 4, wherein determining the first resource set from the resource selection window based on the first time and the first duration comprises:
determining a second resource set from the resource selection window, wherein the second resource set comprises all candidate resources in the resource selection window; and
determining the first resource set from the second resource set, wherein the first resource set does not comprise a second resource, wherein
the second resource comprises either of the following:
the resource that corresponds to the first resource and that is in the first duration starting from the first time; or
the resource that is of the first resource and that is in the resource selection window, wherein the slot in which resource selection is triggered and that corresponds to the resource selection window is in the first duration starting from the first time.

6. The method according to any one of claims 1 to 4, wherein determining the first resource set from the resource selection window based on the first time and the first duration comprises:
determining a third resource set from the resource selection window, wherein the third resource set does not comprise a second resource; and
determining the first resource set from the third resource set, wherein
the second resource comprises either of the following:
the resource that corresponds to the first resource and that is in the first duration starting from the first time; or
the resource that is of the first resource and that is in the resource selection window, wherein the slot in which resource selection is triggered and that corresponds to the resource selection window is in the first duration starting from the first time.

7. The method according to any one of claims 1 to 4, wherein determining the first resource set from the resource selection window based on the first time and the first duration comprises:
determining a fourth resource set from the resource selection window, wherein the fourth resource set comprises all candidate resources in the resource selection window; and
determining the first resource set from the fourth resource set, wherein the first resource set does not comprise a fourth resource, and the fourth resource is a resource that is in a third resource and that does not meet a channel occupancy time sharing condition, wherein
the third resource comprises either of the following:
the resource that corresponds to the first resource and that is in the first duration starting from the first time; or
the resource that is of the first resource and that is in the resource selection window, wherein the slot in which resource selection is triggered and that corresponds to the resource selection window is in the first duration starting from the first time.

8. The method according to any one of claims 1 to 4, wherein determining the first resource set from the resource selection window based on the first time and the first duration comprises:
determining a fifth resource set from the resource selection window, wherein the fifth resource set does not comprise a sixth resource, and the sixth resource is a resource that is in a fifth resource and that does not meet a channel occupancy time sharing condition; and
determining the first resource set from the fifth resource set, wherein
the fifth resource comprises either of the following:
the resource that corresponds to the first resource and that is in the first duration starting from the first time; or
the resource that is of the first resource and that is in the resource selection window, wherein the slot in which resource selection is triggered and that corresponds to the resource selection window is in the first duration starting from the first time.

9. The method according to any one of claims 1 to 8, wherein a length or an end position of the first duration is determined based on at least one of a preconfiguration and indication information.

10. The method according to any one of claims 1 to 9, wherein the method further comprises:
reporting, to a network device, at least one of an identifier of the first resource and an identifier of a resource pool corresponding to the first resource.

11. A communication apparatus, comprising:
a processing unit, configured to determine, at a first time, that listen before talk LBT on a first resource meets a consistent LBT failure, wherein
the processing unit is further configured to determine a first duration; and
the processing unit is further configured to determine a first resource set from a resource selection window based on the first time and the first duration, wherein a resource in the first resource set is used for sidelink communication.

12. The apparatus according to claim 11, wherein
a slot in which resource selection is triggered and that corresponds to the resource selection window is in the first duration starting from the first time, and the first resource set does not comprise a resource that is in the resource selection window and that corresponds to the first resource; or
the first resource set does not comprise a resource that is in the resource selection window, that corresponds to the first resource, and that is in the first duration starting from the first time.

13. The apparatus according to claim 11 or 12, wherein the processing unit is further configured to:
determine, based on at least one of the first duration and a first condition, to cancel the consistent LBT failure, wherein
the first condition comprises:
in the first duration starting from the first time, an accumulated quantity of times that a first channel busy ratio of the first resource is less than a first threshold is greater than a second threshold; and/or
in the first duration starting from the first time, a second channel busy ratio of the first resource is less than a third threshold.

14. The apparatus according to claim 13, wherein the accumulated quantity of times that the first channel busy ratio of the first resource is less than the first threshold is greater than the second threshold, and
the processing unit is further configured to measure, by the terminal device, the first channel busy ratio of the first resource once every second duration in the first duration starting from the first time.

15. The apparatus according to any one of claims 11 to 14, wherein the processing unit is further configured to:
determine a second resource set from the resource selection window, wherein the second resource set comprises all candidate resources in the resource selection window; and
determine the first resource set from the second resource set, wherein the first resource set does not comprise a second resource, wherein
the second resource comprises either of the following:
the resource that corresponds to the first resource and that is in the first duration starting from the first time; or
the resource that is of the first resource and that is in the resource selection window, wherein the slot in which resource selection is triggered and that corresponds to the resource selection window is in the first duration starting from the first time.

16. The apparatus according to any one of claims 11 to 14, wherein the processing unit is further configured to:
determine a third resource set from the resource selection window, wherein the third resource set does not comprise a second resource; and
determine the first resource set from the third resource set, wherein
the second resource comprises either of the following:
the resource that corresponds to the first resource and that is in the first duration starting from the first time; or
the resource that is of the first resource and that is in the resource selection window, wherein the slot in which resource selection is triggered and that corresponds to the resource selection window is in the first duration starting from the first time.

17. The apparatus according to any one of claims 11 to 14, wherein the processing unit is further configured to:
determine a fourth resource set from the resource selection window, wherein the fourth resource set comprises all candidate resources in the resource selection window; and
determine the first resource set from the fourth resource set, wherein the first resource set does not comprise a fourth resource, and the fourth resource is a resource that is in a third resource and that does not meet a channel occupancy time sharing condition, wherein
the third resource comprises either of the following:
the resource that corresponds to the first resource and that is in the first duration starting from the first time; or
the resource that is of the first resource and that is in the resource selection window, wherein the slot in which resource selection is triggered and that corresponds to the resource selection window is in the first duration starting from the first time.

18. The apparatus according to any one of claims 11 to 14, wherein the processing unit is further configured to:
determine a fifth resource set from the resource selection window, wherein the fifth resource set does not comprise a sixth resource, and the sixth resource is a resource that is in a fifth resource and that does not meet a channel occupancy time sharing condition; and
determine the first resource set from the fifth resource set, wherein
the fifth resource comprises either of the following:
the resource that corresponds to the first resource and that is in the first duration starting from the first time; or
the resource that is of the first resource and that is in the resource selection window, wherein the slot in which resource selection is triggered and that corresponds to the resource selection window is in the first duration starting from the first time.

19. The apparatus according to any one of claims 11 to 18, wherein a length or an end position of the first duration is determined based on at least one of a preconfiguration and indication information.

20. The apparatus according to any one of claims 11 to 19, wherein the apparatus further comprises:
a transceiver unit, configured to report, to a network device, at least one of an identifier of the first resource and an identifier of a resource pool corresponding to the first resource.

21. A communication apparatus, comprising a processor, wherein the processor is configured to enable, by executing a computer program or instructions or by using a logic circuit, the communication apparatus to perform the method according to any one of claims 1 to 10.

22. The communication apparatus according to claim 21, wherein the communication apparatus further comprises a memory, and the memory is configured to store the computer program or the instructions.

23. The communication apparatus according to claim 21 or 22, wherein the communication apparatus further comprises a communication interface, and the communication interface is configured to input and/or output a signal.

24. A communication apparatus, comprising a logic circuit and an input/output interface, wherein
the input/output interface is configured to input and/or output a signal, and the logic circuit is configured to perform the method according to any one of claims 1 to 10.

25. A computer-readable storage medium, comprising a computer program or instructions, wherein when the computer program or the instructions are run on a computer, the method according to any one of claims 1 to 10 is performed.

26. A computer program product, comprising instructions, wherein when the instructions are run on a computer, the method according to any one of claims 1 to 10 is performed.

27. A computer program, wherein when the computer program is run on a computer, the method according to any one of claims 1 to 10 is performed.
